# EUROPÄISCHE PATENTSCHRIFT

(11) **EP 3 214 367 B1**
(45) Veröffentlichungstag und Bekanntmachung des Hinweises auf die Patenterteilung: **15.07.2020**
(21) Anmeldenummer: 17159131.6
(22) Anmeldetag: 03.03.2017
(51) Int. Cl.: F23C 7/00, F23D 14/24, F23D 14/82, F23R 3/28, F23L 7/00, F01K 25/00, F22B 1/00

(54) **DRALLSTABILISIERTER BRENNER, INSBESONDERE H2/O2-BRENNER MIT EINER INERTISIERUNGSFRONT ZUM SCHUTZ DER EINDÜSUNGSÖFFNUNGEN DES BRENNERS SOWIE EIN ZUGEHÖRIGES VERFAHREN**
SWIRL-STABILISED BURNER, IN PARTICULAR H2/O2 BURNER WITH AN INERTING FRONT FOR PROTECTING THE SPRAYING OPENINGS OF THE BURNER, AND AN ASSOCIATED METHOD
BRÛLEUR STABILISÉ PAR ROTATION, EN PARTICULIER BRÛLEUR H2/O2 COMPRENANT UNE PARTIE AVANT D'IMMOBILISATION DESTINÉE À PROTÉGER LES ORIFICES D'INJECTION DU BRÛLEUR ET PROCÉDÉ CORRESPONDANT

(30) Priorität: 03.03.2016 DE 102016103797; 03.03.2016 US 201615060482
(43) Veröffentlichungstag der Anmeldung: 06.09.2017
(73) Patentinhaber: Technische Universität Berlin, 10623 Berlin (DE)
(72) Erfinder: Paschereit, Christian Oliver, 14109 Berlin (DE); Schimek, Sebastian, 10555 Berlin (DE); Stathopoulos, Panagiotis, 10589 Berlin (DE)
(74) Vertreter: Gulde & Partner

(56) Entgegenhaltungen:
- WO-A1-2011/113400
- WO-A1-2015/053004
- US-A- 4 148 185
- US-A- 5 775 091
- US-A1- 2012 043 765

## Beschreibung

Der Einsatz von erneuerbaren Energiequellen erhöht die Nachfrage nach schnellen und flexiblen Speichertechniken und der schnellen Verfügbarkeit von Strom, um eine elektrische Netzstabilität zu gewährleisten.

Ein vielversprechender Ansatz ist Herstellung von Wasserstoff und Sauerstoff durch Elektrolyse und die nachfolgende Lagerung. Die Möglichkeit, mit einem vollständig geschlossenen Kreislauf von Wasser, Wasserstoff und Sauerstoff ist ein attraktiver Ansatz für eine emissionsfreie Energiespeicherung.

Die Rückverstromung von Wasserstoff in Gasturbinen sowie in Gas- und Dampfturbinen-Kraftwerken ist eine herausfordernde Aufgabe. Wasserstoff- und Sauerstoff-Gemische sind äußerst reaktiv und führen zu sehr hohen Flammentemperaturen und Flammengeschwindigkeiten. Bei den bisherigen Pilotanlagen kommt es an den Eindüsungspunkten und/oder in den Eindüsungsbereichen, insbesondere bei der Brennstoffeindüsung von Wasserstoff H₂ und der Oxidatoreindüsung von Sauerstoff O₂ durch lokal auftretende chemische Reaktionen, und einhergehend zu sehr hohen Temperaturen (1100° C und mehr) zu unerwünschten Beschädigungen an den Düsen und in den die Düsen umgebenden Bereichen. Die erzeugte Flamme stabilisiert sich nämlich in nachteiliger Weise bereits nahe der Düsenöffnungen.

Bekannt sind ferner so genannte Raketenbrenner. Dem Brenner des Raketenbrenners wird im Prozess dem Brenner nachgeschaltet Wasserdampf hinzugefügt. Bei dieser Verbrennungstechnik werden in der Brennkammer und in der Nähe der die Verbrennungsedukte eindüsenden Düsen, die auch als Injektoren bezeichnet werden, sehr hohe Strömungsgeschwindigkeiten erzeugt, die größer als die Brenngeschwindigkeit sind, sodass die Flamme in vorteilhafter Weise nicht im Bereich der den Brennstoff einbringenden Düse stabilisiert. Die Flamme wird durch die hohen Strömungsgeschwindigkeiten der Verbrennungsedukte stromab getragen. Diese bekannte Technologie hat jedoch den Nachteil, dass der Ausbrand nicht optimal ist und eine relativ hohe Konzentration von unverbranntem Wasserstoff und Sauerstoff im erzeugten Dampf vorliegt, wodurch eine Weiterverwendung des Dampfes, beispielsweise in einem Dampfturbinenprozess zur Stromerzeugung bisher nicht möglich ist.

Zur Verbesserung der Verbrennung sind aus dem Gasturbinenbereich drallstabilisierte Brenner bekannt, deren Einsatz sich mittlerweile etabliert hat. Die drallstabilisierten Brenner zeichnen sich durch eine sehr gute Mischungsqualität aus, wodurch der Ausbrand der Verbrennungsedukte optimiert wird. Das jeweilige Hauptmedium der Verbrennung wird hierbei mit einem Drall versehen, sodass sich am Einlass in die Brennkammer unter Hinzugabe des Oxidationsmediums eine Rezirkulationszone ausbildet, in deren Scherschicht/Scherschichten sich die Flamme stabilisiert. An den Düsen beziehungsweise Düsenöffnungen des Oxidationsmediums kommt es jedoch weiterhin zu lokal auftretenden chemischen Reaktionen und einhergehend zu sehr hohen Temperaturen, sodass unerwünschte Beschädigungen an den Düsen und in den die Düsen umgebenden Bereichen ebenfalls nicht ausbleiben.

In der veröffentlichten Studie "Stöchiometrische Wasserstoff-Sauerstoff-Verbrennung unter Feuchtebedingungen [Titel: Blue Combustion Stoichiometric Hydrogen-Oxygen Combustion Under Humidified Conditions" ASME Turbo Expo 2015: Turbine Technical Conference and Exposition; Combustion, Fuels and Emissions; Montreal, Quebec, Canada, June 15-19, 2015] wurde die Machbarkeit der mit Dampf verdünnten Verbrennung von Wasserstoff und Sauerstoff bei stöchiometrischen Bedingungen anhand eines Versuchsaufbaus erläutert.

Bekannt sind ferner die Druckschriften US 2011/0094239 A1; WO 2011/113400 A1; DE 42 12 810 A1 ; US2016/0169160 A1 und WO 97/06352 A1.

Ausgehend von diesem Stand der Technik liegt der Erfindung die Aufgabe zugrunde einen Brenner zu schaffen, der einen optimalen Ausbrand der Verbrennungsedukte gewährleistet und bei dem keine Beschädigungen an den Eindüsungspunkten oder im Bereich der Eindüsungspunkte der Verbrennungsedukte auftreten, sodass sich die Langlebigkeit des Brenners erhöht und die Qualität des Endproduktes steigt.

Ausgangspunkt der Erfindung ist ein Brenner, der zur Herstellung eines Verbrennungsproduktes eingerichtet ist, um einer dem Brenner in Strömungsrichtung nachgeschalteten Brennkammer mindestens zwei Verbrennungsedukte, mindestens ein Verbrennungsedukt als Brennstoffmedium und mindestens ein Verbrennungsedukt als Oxidationsmedium und mindestens ein inertisierende Eigenschaften aufweisendes Prozessmedium insgesamt verdrallt zuzuführen, sodass sich in der Brennkammer eine drallstabilisierte Flamme bildet, wobei der Brenner zur Stabilisierung der Flamme mindestens eine Drallvorrichtung aufweist.

Erfindungsgemäß ist vorgesehen, dass der Brenner in mindestens einer Zuströmvorrichtung über Öffnungen verfügt, über die Teilmassenströme jeweils getrennt voneinander wie folgt der Brennkammer zuführbar sind:
Erste Ausführungsvariante a):
   Zuführung der Verbrennungsedukte über die jeweilige mindestens eine Öffnung und Zuführung des Prozessmediums über mindestens eine Öffnung.
Zweite Ausführungsvariante b):
   Zuführung der Verbrennungsedukte unter Vorvermischung mindestens eines der Verbrennungsedukte mit dem Prozessmedium zu einem Prozessmedium-Edukt-Gemisch über die jeweilige mindestens eine Öffnung
Dritte Ausführungsvariante c):
   Zuführung der Verbrennungsedukte unter Vorvermischung mindestens eines der Verbrennungsedukte mit dem Prozessmedium zu einem Prozessmedium-Edukt-Gemisch über die jeweilige mindestens eine Öffnung und zusätzliche Zuführung des Prozessmediums über die mindestens eine Öffnung.

Dabei ist für alle Ausführungsvarianten gleichermaßen vorgesehen, dass die Öffnungen in der mindestens einen Zuströmvorrichtung derart angeordnet sind, dass die Teilmassenströme der Verbrennungsedukte und/oder Prozessmedium-Edukt-Gemische unter Ausbildung der drallstabilisierten Flamme erst hinter einer Inertisierungsfront zusammen treffen, die durch das gleichzeitige Vorhandensein des inertisierenden Prozessmediums in mindestens einem der Teilmassenströme gebildet wird, wobei sich die Inertisierungsfront
- zwischen der am weitesten stromab liegenden Öffnung eines der Verbrennungsedukte oder eines der Prozessmedium-Edukt-Gemische oder
- zwischen den am weitesten stromab liegenden Öffnungen der Verbrennungsedukte und/oder Prozessmedium-Edukt-Gemische
und jeweils der in einem Flammenfuß der Flamme zusammen kommenden Verbrennungsedukte und/oder Prozessmedium-Edukt-Gemische ausbildet.

Der Brenner und das Verfahren der ersten Ausführungsvariante a) sind durch folgende Merkmale gekennzeichnet. Der Brenner zur Herstellung eines Verbrennungsproduktes ist eingerichtet, um einer dem Brenner in Strömungsrichtung nachgeschalteten Brennkammer mindestens zwei Verbrennungsedukte zuzuführen, mindestens ein Verbrennungsedukt als Brennstoffmedium und mindestens ein Verbrennungsedukt als Oxidationsmedium und mindestens ein inertisierende Eigenschaften aufweisendes Prozessmedium insgesamt verdrallt zuzuführen, sodass sich in der Brennkammer eine drallstabilisierte Flamme bildet, wobei der Brenner zur Stabilisierung der Flamme mindestens eine Drallvorrichtung aufweist, wobei der Brenner in mindestens einer Zuströmvorrichtung über Öffnungen verfügt, über die Teilmassenströme jeweils getrennt voneinander wie folgt zuführbar sind: Zuführung der Verbrennungsedukte über die jeweilige mindestens eine Öffnung und Zuführung des inertisierenden Prozessmediums über mindestens eine Öffnung wobei die mindestens eine Zuströmvorrichtung mindestens eine Passage aufweist, in der getrennt voneinander angeordnet Edukt-Eindüsungsöffnungen zur Zuführung der Verbrennungsedukte angeordnet sind.

Erfindungsgemäß zeichnet sich die Ausführungsvariante a) dadurch aus, dass die mindestens eine Zuströmvorrichtung über die mindestens eine Prozessmedium-Zuführungsöffnung zur getrennten Zuführung des inertisierenden Prozessmediums verfügt, wobei mindestens eine der Edukt-Eindüsungsöffnungen mindestens eines Verbrennungseduktes stromab des Brenners gesehen am Ausgang der mindestens einen Zuströmvorrichtung nahe der Brennkammer angeordnet ist, wobei sich das inertisierende Prozessmedium in der mindestens einen Passage ausbreitet und bis zu den Edukt-Eindüsungsöffnungen gelangt, sodass die Teilmassenströme der Verbrennungsedukte unter Ausbildung der drallstabilisierten Flamme von den Eindüsungsöffnungen verdrängt werden und erst hinter einer Inertisierungsfront zusammen treffen, die an den Eindüsungsöffnungen durch das gleichzeitige Vorhandensein des inertisierenden Prozessmediums gebildet wird, wobei sich die Inertisierungsfront zwischen der am weitesten stromab liegenden Edukt-Eindüsungsöffnung eines der Verbrennungsedukte und jeweils der in einem Flammenfuß der Flamme zusammen kommenden Verbrennungsedukte ausbildet.

Der Brenner und das Verfahren der dritten Ausführungsvariante c) sind durch folgende Merkmale gekennzeichnet. Der Brenner zur Herstellung eines Verbrennungsproduktes ist eingerichtet, um einer dem Brenner in Strömungsrichtung nachgeschalteten Brennkammer mindestens zwei Verbrennungsedukte zuzuführen, mindestens ein Verbrennungsedukt als Brennstoffmedium und mindestens ein Verbrennungsedukt als Oxidationsmedium und mindestens ein inertisierende Eigenschaften aufweisendes Prozessmedium insgesamt verdrallt zuzuführen, sodass sich in der Brennkammer eine drallstabilisierte Flamme bildet, wobei der Brenner zur Stabilisierung der Flamme mindestens eine Drallvorrichtung aufweist, wobei der Brenner in mindestens einer Zuströmvorrichtung über Öffnungen verfügt, über die Teilmassenströme jeweils getrennt voneinander wie folgt zuführbar sind: Zuführung der Verbrennungsedukte unter Vorvermischung mindestens eines der Verbrennungsedukte mit dem inertisierenden Prozessmedium zu einem Prozessmedium-Edukt-Gemisch über die jeweilige mindestens eine Öffnung und Zuführung des inertisierenden Prozessmediums über die mindestens eine Öffnung, wobei die mindestens eine Zuströmvorrichtung mindestens eine Passage aufweist, in der getrennt voneinander angeordnet Edukt-Eindüsungsöffnungen zur Zuführung der Prozessmedium-Edukt-Gemisch angeordnet sind.

Erfindungsgemäß zeichnet sich die Ausführungsvariante c) dadurch aus, dass die mindestens eine Zuströmvorrichtung über die mindestens eine Prozessmedium-Zuführungsöffnung zur getrennten Zuführung des inertisierenden Prozessmediums verfügt, wobei mindestens eine der Edukt-Eindüsungsöffnungen mindestens eines Verbrennungseduktes stromab des Brenners gesehen am Ausgang der mindestens einen Zuströmvorrichtung nahe der Brennkammer angeordnet ist, wobei sich das inertisierende Prozessmedium in der mindestens einen Passage ausbreitet und bis zu den Edukt-Eindüsungsöffnungen gelangt, sodass die Teilmassenströme der Prozessmedium-Edukt-Gemische unter Ausbildung der drallstabilisierten Flamme von den Eindüsungsöffnungen verdrängt werden und erst hinter einer Inertisierungsfront zusammen treffen, die an den Eindüsungsöffnungen durch das gleichzeitige Vorhandensein des inertisierenden Prozessmediums gebildet wird, wobei sich die Inertisierungsfront zwischen der am weitesten stromab liegenden Edukt-Eindüsungsöffnung eines der Prozessmedium-Edukt-Gemische und jeweils der in einem Flammenfuß der Flamme zusammen kommenden Prozessmedium-Edukt-Gemische ausbildet.

Erfindungsgemäß ist vorgesehen, dass die Zuströmvorrichtung vor der Drallvorrichtung oder in die Drallvorrichtung integriert oder hinter der Drallvorrichtung angeordnet ist.

Bevorzugt ist, dass die Öffnungen der Verbrennungsedukte oder der Prozessmedium-Edukt-Gemische radial zur axialen Längsmittelachse des Brenners gesehen in einer Ebene oder in unterschiedlichen Ebenen angeordnet sind.

Bevorzugt ist ferner, dass die mindestens eine Zuströmvorrichtung ausschließlich eine erste Passage oder die erste Passage und mindestens eine weitere Passage aufweist.

Ferner bevorzugt ist eine Anordnung die vorsieht, dass mindestens einer der Passagen eine Drallvorrichtung zugeordnet ist. In bevorzugter Ausgestaltungen der Erfindung ist der mindestens einen ersten Passage und der mindestens einen weiteren Passage eine gemeinsame Drallvorrichtung oder sind den Passagen separate Drallvorrichtungen zugeordnet.

Es ist weiter bevorzugt vorgesehen, dass die Öffnungen zur getrennten Zuführung des Prozessmediums und der Verbrennungsedukte und/oder der Prozessmedium-Edukt-Gemische gemäß den Varianten a) und c) ausschließlich in der ersten Passage oder verteilt in der ersten Passage und/oder der mindestens einen weiteren Passage angeordnet sind.

Es ist weiter bevorzugt vorgesehen, dass die Öffnungen zur getrennten Zuführung der Verbrennungsedukte, wobei mindestens eines der Verbrennungsedukte als vorvermischtes Prozessmedium-Edukt-Gemisch zugeführt wird, gemäß der Variante b) ausschließlich in der ersten Passage oder verteilt in der ersten Passage und/oder der mindestens einen weiteren Passage angeordnet sind.

Ausgangspunkt der Erfindung ist ein Verfahren zur Herstellung eines Verbrennungsproduktes bei dem einem Brenner einer in Strömungsrichtung nachgeschalteten Brennkammer mindestens zwei Verbrennungsedukte, mindestens ein Verbrennungsedukt als Brennstoffmedium und mindestens ein Verbrennungsedukt als Oxidationsmedium und mindestens ein inertisierende Eigenschaften aufweisendes Prozessmedium insgesamt verdrallt zugeführt werden, sodass in der Brennkammer eine drallstabilisierte Flamme gebildet wird, wobei der Brenner zur Stabilisierung der Flamme mindestens eine Drallvorrichtung aufweist.

Erfindungsgemäß ist vorgesehen, dass dem Brenner über Öffnungen in einer Zuströmvorrichtung Teilmassenströme jeweils getrennt zugeführt werden.

Erfindungsgemäß zeichnet sich das Verfahren dadurch aus, dass die Öffnungen in der mindestens einen Zuströmvorrichtung - stromab des Brenners gesehen - derart angeordnet werden, dass die Teilmassenströme der Verbrennungsedukte und/oder Prozessmedium-Edukt-Gemische unter Ausbildung der drallstabilisierten Flamme erst hinter einer Inertisierungsfront zusammen treffen, die durch das gleichzeitige Vorhandensein des inertisierenden Prozessmediums in mindestens einem der Teilmassenströme gebildet wird, wobei die Inertisierungsfront
- zwischen der am weitesten stromab liegenden Öffnung mindestens eines der Verbrennungsedukte und/oder mindestens eines der Prozessmedium-Edukt-Gemische oder
- zwischen den am weitesten stromab liegenden Öffnungen mindestens eines der Verbrennungsedukte und/oder mindestens eines der Prozessmedium-Edukt-Gemische
und jeweils der in einem Flammenfuß der Flamme zusammen kommenden Verbrennungsedukte und/oder Prozessmedium-Edukt-Gemische ausbildet wird.

Bevorzugt ist erfindungsgemäß, dass mindestens eines der Verbrennungsedukte und das Prozessmedium
- vor einer Zuführung über die Öffnungen in die mindestens eine Zuströmvorrichtung des Brenners zu einem Prozessmedium-Edukt-Gemisch vorgemischt oder
- nach einer Zuführung über die Öffnungen in die Zuströmvorrichtung des Brenners noch vor seinem Aufeinandertreffen mit dem anderen Verbrennungsedukt oder einem anderen Prozessmedium-Edukt-Gemisch zu einem Prozessmedium-Edukt-Gemisch gemischt werden.

Bevorzugt ist es erfindungsgemäß ferner, dass bei ausschließlicher Ausbildung einer ersten Passage eine Inertisierungsfront mit einer inneren Inertisierungszone zwischen der am weitesten stromab liegenden Öffnung eines der Verbrennungsedukte und/oder eines der Prozessmedium-Edukt-Gemische oder zwischen den am weitesten stromab liegenden Öffnungen der Verbrennungsedukte und/oder der Prozessmedium-Edukt-Gemische und jeweils der in einem Flammenfuß der Flamme zusammen kommenden Verbrennungsedukte und/oder Prozessmedium-Edukt-Gemische ausgebildet wird.

In einer anderen bevorzugten Ausgestaltung ist vorgesehen, dass bei Ausbildung einer ersten Passage und mindestens einer weiteren Passage eine Inertisierungsfront mit einer inneren Inertisierungszone und einer äußeren Inertisierungszone zwischen der am weitesten stromab liegenden Öffnung eines der Verbrennungsedukte und/oder eines der Prozessmedium-Edukt-Gemische oder zwischen den am weitesten stromab liegenden Öffnungen der Verbrennungsedukte und/oder der Prozessmedium-Edukt-Gemische und jeweils der in einem Flammenfuß der Flamme zusammen kommenden Verbrennungsedukte und/oder Prozessmedium-Edukt-Gemische ausgebildet wird.

Außerdem ist in variabler Ausgestaltung der Erfindung vorgesehen, dass der Drall eines Teilmassenstroms für die drallstabilisierte Flamme in der ersten Passage oder in der ersten Passage und/oder in der mindestens einen weiteren Passage erzeugt wird.

Durch die jeweiligen Maßnahmen kann je nach Ausführungsvariante in vorteilhafter Weise sicher gestellt werden, dass sich die Teilmassenströme der getrennt zugeführten Verbrennungsedukte oder Prozessmedium-Edukt-Gemische auf keinen Fall im Bereich der Öffnungen der Verbrennungsedukte und/oder Prozessmedium-Edukt-Gemische, sondern erst hinter der erfindungsgemäß gebildeten Inertisierungsfront bilden, wodurch die Nachteile des Standes der Technik überwunden werden, da die Öffnungen in vorteilhafter Weise vor unerwünschten chemischen Reaktionen und einer zu hohen Temperaturbeanspruchung geschützt werden .

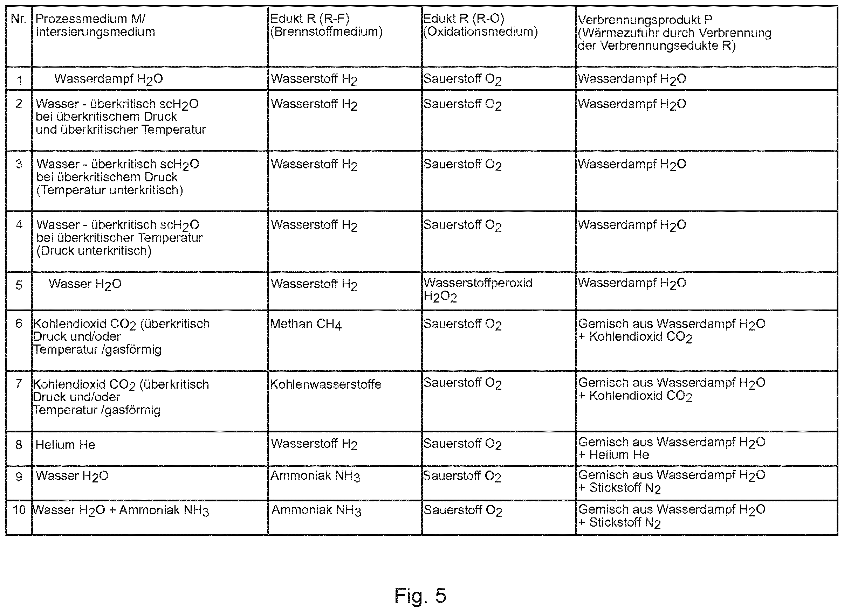

Die für den Brenner und das zugehörige Verfahren einsetzbaren Verbrennungsedukte und Prozessmedien werden in der nachfolgenden detaillierten Beschreibung genannt und sind zudem in der Tabelle der Figur 5 aufgelistet.

Die Erfindung wird anhand von Figuren in mehreren Ausführungsformen erläutert, wobei in Zusammenarbeit mit den Ausführungsformen auf die verschiedenen Ausführungsvarianten und verschiedenen Ausgestaltungen eingegangen wird.

Es zeigen:
- Figur 1A: in einer schematischen prinzipiellen Schnittdarstellung einen Brenner nach dem Stand der Technik;
- Figur 1B: in einer schematischen prinzipiellen Schnittdarstellung ein Verfahren zur Dampfüberhitzung mit dem herkömmlichen Brenner gemäß Figur 1A;
- Figur 2: in einer schematischen prinzipiellen Schnittdarstellung des erfindungsgemäßen Verfahrens mit einem der erfindungsgemäßen Brenner gemäß einer Ausführungsform gemäß den Figuren 3A bis 3G am Beispiel einer Dampfüberhitzung;
- Figur 3A: in einer schematischen prinzipiellen Schnittdarstellung einen erfindungsgemäßen Brenner in einer ersten Ausführungsform;
- Figur 3B: in einer schematischen prinzipiellen Schnittdarstellung einen erfindungsgemäßen Brenner in einer zweiten Ausführungsform;
- Figur 3C: in einer schematischen prinzipiellen Schnittdarstellung einen erfindungsgemäßen Brenner in einer dritten Ausführungsform;
- Figur 3D: in einer schematischen prinzipiellen Schnittdarstellung einen erfindungsgemäßen Brenner in einer vierten Ausführungsform;
- Figur 3E: in einer schematischen prinzipiellen Schnittdarstellung einen erfindungsgemäßen Brenner in einer fünften Ausführungsform;
- Figur 3F: in einer schematischen prinzipiellen Schnittdarstellung einen erfindungsgemäßen Brenner in einer sechsten Ausführungsform;
- Figur 3G: in einer schematischen prinzipiellen Schnittdarstellung einen erfindungsgemäßen Brenner in einer siebenten Ausführungsform;
- Figur 4: ein beispielhafter Anwendungsfall eines erfindungsgemäßen Brenners und des zugehörigen erfindungsgemäßen Verfahrens.
- Figur 5: eine Tabelle in der mögliche Kombinationen von Prozessmedien, Verbrennungsedukten unter Angabe des Verbrennungsproduktes angegeben sind, die mittels des erfindungsgemäßen Brenners und des erfindungsgemäßen Verfahrens zum Einsatz kommen können.

Die Erfindung wird anhand eines H₂/0₂-Brenners 100 erläutert, dessen Verbrennungsedukte R Wasserstoff-H₂ als Brennstoffmedium R-F und Sauerstoff-0₂ als Oxidationsmedium R-O sind und dessen Prozessmedium M Wasserdampf ist.

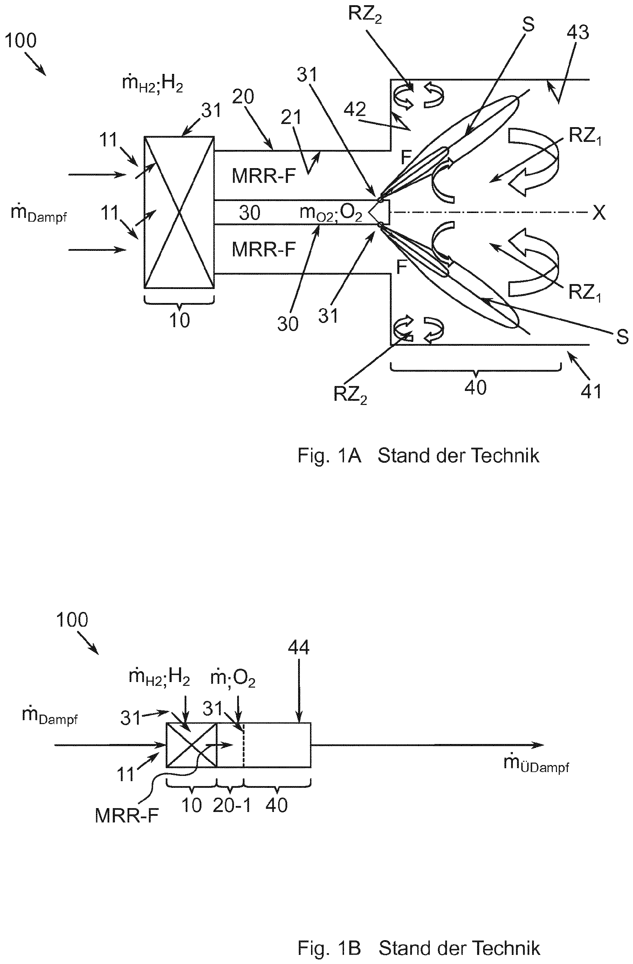

Die Figur 1A zeigt zunächst in einer schematischen prinzipiellen Schnittdarstellung einen rotationssymmetrischen Brenner 100 nach dem Stand der Technik. Der Brenner 100 umfasst eine Drallvorrichtung 10-1 die einen Drall generiert und nachfolgend als Drallgenerator 10-1 bezeichnet wird, und eine Zuströmvorrichtung 20-1 sowie eine Brennkammer 40.

Dem Drallgenerator 10-1 wird an einer Öffnung 11, die nachfolgend als Prozessmedium-Zuführungsöffnung 11 bezeichnet wird, ein vorgebbarer Teilmassenstrom eines Prozessmediums M, beispielsweise *ṁ*_{Dampf} Wasserdampf zugeführt.

Dem Drallgenerator 10-1 wird über eine weitere Edukt-Eindüsungsöffnung 31 ein weitere vorgebbarer Teilmassenstrom *ṁ*_{H2} Wasserstoff-H₂ als Brennstoffmedium R-F zugeführt.

Der Teilmassenstrom des Wasserstoffs-H₂ als Brennstoffmedium R-F und der Teilmassenstrom des Wasserdampfes *ṁ*_{Dampf} als Prozessmedium M werden im Drallgenerator 10-1 gemischt und als verdralltes Wasserdampf/Wasserstoff-Gemisch *ṁ*_{Dampf}/*ṁ*_{H2} in die Zuströmvorrichtung 20-1 geleitet.

Am Ende der Zuströmvorrichtung 20-1 in Strömungsrichtung gemäß den Pfeilen links und rechts des Drallgenerators 10-1 gesehen, sind auf der in der Längsmittelachse X des Brenners 100 rotationssymmetrisch angeordneten und ausgebildeten Zuströmvorrichtung 20-1 nahe der Brennkammer 40 Öffnungen, sogenannte Edukt-Eindüsungsöffnungen 31 einer Eindüsungsvorrichtung 30 in der Art einer Lanze angeordnet. Die Längsmittelachse X des Brenners 100 entspricht der Drallachse.

Ein Drall ist eine Strömung, die um die in Strömungsrichtung liegende Drallachse rotiert.

Die Eindüsungsvorrichtung 30 liegt innerhalb der Zuströmvorrichtung 20-1 und ist ebenfalls rotationssymmetrisch auf der Längsmittelachse X des Brenners 100 angeordnet und ausgebildet.

Über die Edukt-Eindüsungsöffnungen 31 der Eindüsungsvorrichtung 30 wird dem Wasserstoff-Wasserdampf/H₂-Gemisch MRR-F ein vorgebbarer Teilmassenstrom *ṁ*_{O2} Sauerstoff-0₂ als Oxidationsmedium R-O hinzugefügt.

Das Wasserdampf/H₂-Gemisch MRR-F wird, wie die Figur 1A verdeutlicht, zur Verbesserung der Verbrennung mit einem Drall versehen, sodass sich am Einlass in die Brennkammer 40 unter Hinzugabe des Oxidationsmediums-O₂ eine Rezirkulationszone RZ, im Detail eine innere Rezirkulationszone RZ₁ und eine äußere Rezirkulationszone RZ₂ ausbildet, in deren Scherschicht/Scherschichten S sich die Flamme F stabilisiert.

Der Drall wird rotationssymmetrisch in Strömungsrichtung gesehen entlang der Längsachse X des Brenners 100 gebildet und führt zu der in Figur 1A dargestellten Flammengeometrie der Flamme F.

Wie erwähnt wird durch die Rezirkulationszonen RZ₁, RZ₂ der Ausbrand und damit die Qualität der Verbrennung verbessert. Jedoch kommt es an den Edukt-Eindüsungsöffnungen 31 zu den bereits erwähnten lokal auftretenden chemischen Reaktionen und einhergehend zu sehr hohen Temperaturen, sodass Beschädigungen an den Düsen (die nicht näher dargestellt sind) und in den die Düsen umgebenden Bereichen auftreten.

Außerdem kann es zu einem Rückschlagen der Flamme F entgegen der Strömungsrichtung (in allen Figuren von links nach rechts dargestellt) kommen, sodass die Düsen und die die Düsen umgebende Bereiche, insbesondere die Eindüsungspunkte 31 beziehungsweise Eindüsungsbereiche durch die lokal auftretenden chemischen Reaktionen und die einhergehenden sehr hohen Temperaturen trotz der Ausbildung der in der Scherschicht S stabilisierten Flamme F beschädigt werden können.

Die Figur 1B verdeutlicht in einer Zusammenschau mit der Figur 1A das bekannte Verfahren am Beispiel einer Dampfüberhitzung.

Die nachfolgenden als Schritte bezeichneten Verfahrensvorgänge finden im Betrieb des Brenners 100 im Wesentlichen gleichzeitig und kontinuierlich statt.

Dem Drallgenerator 10-1 wird in einem ersten Schritt über die Prozessmedium-Zuführungsöffnung 11 Wasserdampf *ṁ*_{Dampf} als Prozessmedium M zugeführt, wie anhand des Bezugszeichens *ṁ*_{Dampf} verdeutlicht wird.

Dem Drallgenerator 10-1 wird im Wesentlichen zeitgleich innerhalb des ersten Schrittes über eine Edukt-Eindüsungsöffnung 31 das Brennstoffmedium R-F, insbesondere ein vorgebbarer Massenstrom *ṁ*_{H2} Wasserstoff-H₂ zugeführt.

Der Wasserstoff-H₂ als Brennstoffmedium R-F und Wasserdampf *ṁ*_{Dampf} beispielsweise mit einer Temperatur von 300°C werden in einem zweiten Schritt im Drallgenerator 10-1 gemischt und in einem dritten Schritt als mit dem Drall versehenes Gemisch MRR-F in die mindestens eine Zuströmvorrichtung 20-1 geleitet.

Über die Edukt-Eindüsungsöffnungen 31 der Eindüsungsvorrichtung 30 (vergleiche Figur 1A) wird dem Wasserdampf/H₂-Gemisch *ṁ*_{Dampf}/H₂ in einem vierten Schritt Sauerstoff-0₂ als Oxidationsmedium R-O hinzugefügt.

Während des zweiten Schrittes wird das Wasserdampf/H₂-Gemisch *ṁ*_{Dampf}/H₂ zur Verbesserung der Verbrennung mit dem Drall versehen, sodass sich schließlich am Einlass in die Brennkammer 40 unter Hinzugabe des Oxidationsmediums-O2 in dem vierten Schritt die Rezirkulationszone RZ, im Detail die innere Rezirkulationszone RZ₁ und die äußere Rezirkulationszone RZ₂ ausbildet, in deren Scherschicht S sich die brennende Flamme F bildet und stabilisiert.

Insofern, je nach den eingesetzten Verbrennungsedukten R keine Selbstzündung möglich ist, wird die Flamme F einmalig mit einem Zündsystem gezündet und brennt dann kontinuierlich weiter. Das Zündsystem ist nicht Gegenstand der Erfindung und dieser Beschreibung.

In der Brennkammer 40 wird das Prozessmedium M der Wasserdampf *ṁ*_{Dampf} in einem fünften Schritt auf 900°C erhitzt, wobei die Verbrennungsedukte R durch den Drallgenerator 10-1 in dem zweiten Schritt gut vermischt worden sind, sodass in der Brennkammer 40 ein guter Ausbrand erreicht wird, wodurch schließlich als Produkt beziehungsweise als Verbrennungsendprodukt P des Verfahrens ein überhitzter Dampf *ṁ*_{ÜDampf} mit gutem Reinheitsgrad erzeugt wird.

An der Brennkammer 40 ist optional eine Brennkammer-Zuführleitung 44 angeordnet, über die ein Kühlmedium, insbesondere Wasser mit gegenüber dem Prozessmedium geringerer Temperatur zugeführt wird, sodass der überhitzte Wasserdampf ṁ_{ÜDampf} bereits in der Brennkammer 40 herunter gekühlt werden kann beziehungsweise sich die entstehende Dampfmenge erhöht.

Ungelöst sind jedoch die Probleme der Beschädigungen, die an den Düsen (nicht näher dargestellt) und in den die Düsen umgebenden Bereichen auftreten.

Dieses Problem wird durch den erfindungsgemäßen Brenner 100' gelöst.

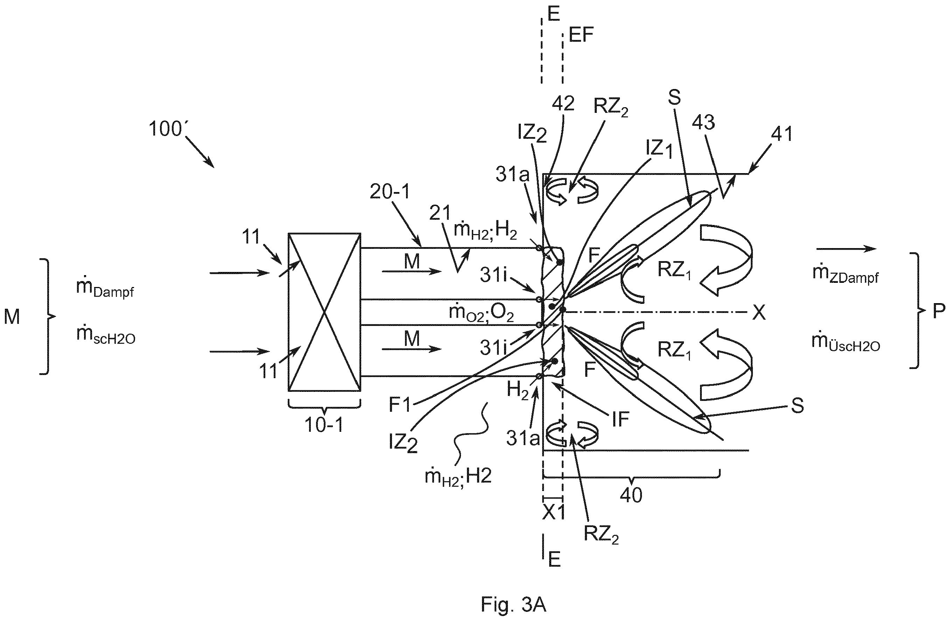

Die einen erfindungsgemäßen Brenner 100' zeigenden schematischen Schnittdarstellungen der nachfolgend die Erfindung anhand der Ausführungsformen erläuternden Figuren 3A bis 3G bilden einen Brenner 100' ab. Der geometrische Aufbau des erfindungsgemäßen Brenners 100' ist nicht auf rotationssymmetrische Brenner 100' beschränkt. Ein erfindungsgemäßer Brenner 100' kann beispielsweise auch rechteckig oder oval ausgebildet sein, beziehungsweise die in der oder den Zuströmvorrichtungen angeordneten Passagen müssen nicht rotationssymmetrisch angeordnet sein, wie noch erläutert wird.

Nachfolgend werden Ausführungsformen und Ausführungsvarianten verschiedener Brenner 100' und das verbesserte erfindungsgemäße Verfahren zur Herstellung des Verbrennungsendproduktes P beschrieben, wobei die Gemeinsamkeiten und Unterschiede der Ausführungsformen verdeutlicht werden.

Es werden am Ende der Beschreibung und in der Tabelle (vgl. die Tabelle gemäß Figur 5) weitere Prozessmedien M und Verbrennungsedukte R sowie die zugehörigen Endprodukte P genannt, die ebenfalls in dem erfindungsgemäßen Brenner 100' und in dem zugehörigen Verfahren eingesetzt beziehungsweise verwendet werden können.

Die dabei verwendeten Prozessmedium-Edukt-Gemische MR sind in der Tabelle gemäß Figur 5 nicht genannt. Sie ergeben sich bei einer Vermischung des jeweils eingesetzten Prozessmediums M und dem jeweiligen Verbrennungsedukt R.

Die Beschreibung erfolgt anhand der Prozessmedien *ṁ*_{Dampf} oder überkritischem Wasser *ṁ*_{scH2O} und als Verbrennungsedukte R Wasserstoff-H₂ als Brennstoffmedium R-F und Sauerstoff-0₂ als Oxidationsmedium R-O, wobei als Verbrennungsendprodukte P überhitzter Wasserdampf *ṁ*_{ÜDampf} oder überhitztes überkritisches Wasser ṁ_{ÜscH2O} hergestellt wird. Andere Prozessmedien M sind möglich (vgl. wiederum die Tabelle gemäß Figur 5).

Unter überkritischem Wasser ṁ_{scH2O} soll zusammengefasst Wasser verstanden werden, welches der mindestens einen Zuströmvorrichtung 20-1 innerhalb des Verfahren bei einem überkritischem Druck und einer unterkritischer Temperatur zugeführt wird, und welches in der Brennkammer 40 weiter erhitzt beziehungsweise überhitzt wird, sodass es schließlich eine höhere, insbesondere eine überkritische Temperatur aufweist. Es wird aber unter Wasser *ṁ*_{scH2O} auch Wasser verstanden, welches bei seiner Zuführung zu der mindestens einen Zuströmvorrichtung 20-1 bereits einen überkritischen Druck und eine überkritische Temperatur aufweist, sodass in der Brennkammer 40 durch Zuführung von Wärme eine Erhitzung beziehungsweise Überhitzung, das heißt ein Temperaturanstieg innerhalb des überkritischen Temperaturbereiches erfolgt.

Gemäß einer ersten Ausführungsvariante a) werden in einigen Ausführungsformen Wasserstoff-H₂ als Brennstoffmedium R-F und Sauerstoff-0₂ als Oxidationsmedium R-O sowie Wasserdampf *ṁ*_{ÜDampf} oder überkritisches Wasser ṁ_{scH2O} als Prozessmedium M - ohne dass vor der mindestens einen Zuströmvorrichtung 20-1 eine Vorvermischung stattfindet, getrennt in die und eine Zuströmvorrichtung 20-1 gefahren. Eine Vermischung des Wasserstoffs-H₂ als Brennstoffmedium R-F und/oder des Sauerstoff-0₂ als Oxidationsmedium R-O mit Wasserdampf *ṁ*_{ÜDampf} oder überkritischem Wasser ṁ_{scH2O} als Prozessmedium M kann noch in der Zuströmvorrichtung 20-1 erfolgen. Eine solche Vermischung ist vorteilhaft, jedoch nicht zwingend notwendig, um die erfindungsgemäße Inertisierungsfront IF auszubilden.

In einer nicht explizit dargestellten Ausführungsform werden nur der Sauerstoff-0₂ als Oxidationsmedium R-O sowie Wasserdampf *ṁ*_{Dampf} beziehungsweise überkritisches Wasser ṁ_{scH2O} gemäß der zweiten Ausführungsvariante b) und der dritten Ausführungsvariante c) vor der mindestens einen Zuströmvorrichtung 20-1 vorgemischt, sodass ein Prozessmedium-Edukt-Gemisch MRR-O vorliegt.

In einer anderen ebenfalls nicht explizit dargestellten Ausführungsform werden nur der Wasserstoff-H₂ als Brennstoffmedium R-F sowie Wasserdampf *ṁ*_{Dampf} beziehungsweise überkritisches Wasser ṁ_{scH2O} gemäß der zweiten Ausführungsvariante b) und der dritten Ausführungsvariante c) vor der mindestens einen Zuströmvorrichtung 20-1 vorgemischt, sodass ein Prozessmedium-Edukt-Gemisch MRR-F vorliegt.

In einer auch nicht dargestellten Ausführungsform werden Wasserstoff-H₂ als Brennstoffmedium R-F mit Wasserdampf *ṁ*_{Dampf} oder überkritischem Wasser ṁ_{scH2O} und Sauerstoff-0₂ als Oxidationsmedium R-O mit Wasserdampf *ṁ*_{Dampf} oder überkritischem Wasser ṁ_{scH2O} gemäß der zweiten Ausführungsvariante b) und der dritten Ausführungsvariante c) vor der mindestens einen Zuströmvorrichtung 20-1 vorgemischt, sodass die Prozessmedium-Edukt-Gemische MRR-F und MRR-O vorliegen.

Eine Vermischung der Verbrennungsedukte R oder Prozessmedium-Edukt-Gemische MRR-F und MRR-O, insbesondere Wasserstoff-H2 als Brennstoffmedium R-F und Sauerstoff-02 als Oxidationsmedium R-O findet in allen Brenner-Ausführungsformen an einem Flammenfuß F1 der Flamme F nahe der Eintrittsöffnung in die Brennkammer 40 oder erst in der Brennkammer 40 und nicht in der mindestens einen Zuströmvorrichtung 20-1 statt, worin neben der Bildung der Inertisierungsfront IF ein wesentlicher Aspekt der Erfindung zu sehen ist, wie nachfolgend detailliert erläutert wird.

Die erfindungsgemäße Idee besteht darin, die inerten Eigenschaften des Prozessmediums M, insbesondere des Wasserdampfes *ṁ*_{Dampf} beziehungsweise des überkritischen Wassers *ṁ*_{scH2O} zu nutzen, um durch die Inertisierung gewünschter Bereiche die reaktionsfähigen Verbrennungsedukte R (H₂/0₂) einzeln, beziehungsweise jeweils mit einem Prozessmedium M vorgemischt oder gemischt derart von den Edukt-Eindüsungsöffnungen 31 zu **verdrängen,** sodass eine chemische Reaktion der extrem reaktiven Verbrennungsedukte R an den Edukt-Eindüsungsöffnungen 31 von vorn herein auszuschließen.

Das jeweilige Prozessmedium M wird durch die Vorgehensweise erfindungsgemäß gleichzeitig als Inertisierungsmedium verwendet und die Verbrennungsedukte R werden getrennt voneinander oder mit dem jeweiligen Prozessmedium M vorvermischt oder gemischt der mindestens einen Zuströmvorrichtung 20-1 zugeführt, sodass die Verbrennung der Verbrennungsedukte R unter Zugabe des Prozessmediums M zur Erzeugung des Verbrennungsendproduktes P erst in mindestens einem dafür vorgesehen Bereich der Brennkammer 40, insbesondere nahe der Eintrittsöffnung der Brennkammer 40 stattfindet.

Der mindestens eine inertisierte Bereich wird im Bereich der Edukt-Eindüsungsöffnungen 31 und an den Edukt-Eindüsungsöffnungen 31 selbst gebildet, wodurch keine lokal auftretenden chemischen Reaktionen mehr zu Beschädigungen an den Düsen führen, wie nachfolgend noch genauer erläutert wird.

Durch die Inertisierung der Edukt-Eindüsungsöffnungen 31 und der angrenzenden Bereiche der Edukt-Eindüsungsöffnungen 31 werden die dort wirkenden Temperaturen im Vergleich zu den bisher bei Brennern 100 nach dem Stand der Technik auftretenden Temperaturen gesenkt.

Mit anderen Worten entstehen in dem Bereich um die Edukt-Eindüsungsöffnungen 31 herum und an den Edukt-Eindüsungsöffnungen 31 selbst durch die Inertisierung geringere als die bisher erreichten Temperaturen. Durch die geringeren Temperaturen in den Bereichen um die Edukt-Eindüsungsöffnungen 31 herum und an den Edukt-Eindüsungsöffnungen 31 selbst, wird in vorteilhafter Weise die Dauerbeständigkeit des/der Brenner/s 100' erhöht.

Erste Ausführungsform gemäß Figur 3A:
Die Figur 3A zeigt einen erfindungsgemäßen Brenner 100' dessen prinzipieller Aufbau sich von dem herkömmlichen Brenner 100 gemäß Figur 1A unterscheidet.

Bei dem erfindungsgemäßen Brenner 100' ist es gemäß der Ausführungsvariante a) vorgesehen einen vorgebbaren Massenstrom eines Prozessmediums M, beispielsweise Wasserdampf *ṁ*_{Dampf} oder überkritisches Wasser *ṁ*_{scH2O} über den Drallgenerator 10-1 zu leiten und über die dazu eingerichtete mindestens eine Zuströmvorrichtung 20-1 in die Brennkammer 40 zu fahren.

Gemäß der Ausführungsvariante a) werden Wasserstoff-H₂ als Brennstoffmedium R-F sowie Sauerstoff-0₂ als Oxidationsmedium R-O und der Wasserdampf *ṁ*_{Dampf} somit gegenüber dem Stand der Technik an einem anderen Ort getrennt voneinander, nämlich in die mindestens eine Zuströmvorrichtung 20-1 eingebracht. Eine Einbringung eines Prozessmedium-Edukt-Gemisches MRR-F aus Wasserstoff-H₂ als Brennstoffmedium R-F und Prozessmedium M, wie aus dem Stand der Technik Figur 1A und 10-1 zu entnehmen ist, in den Drallgenerator 10-1 erfolgt nicht.

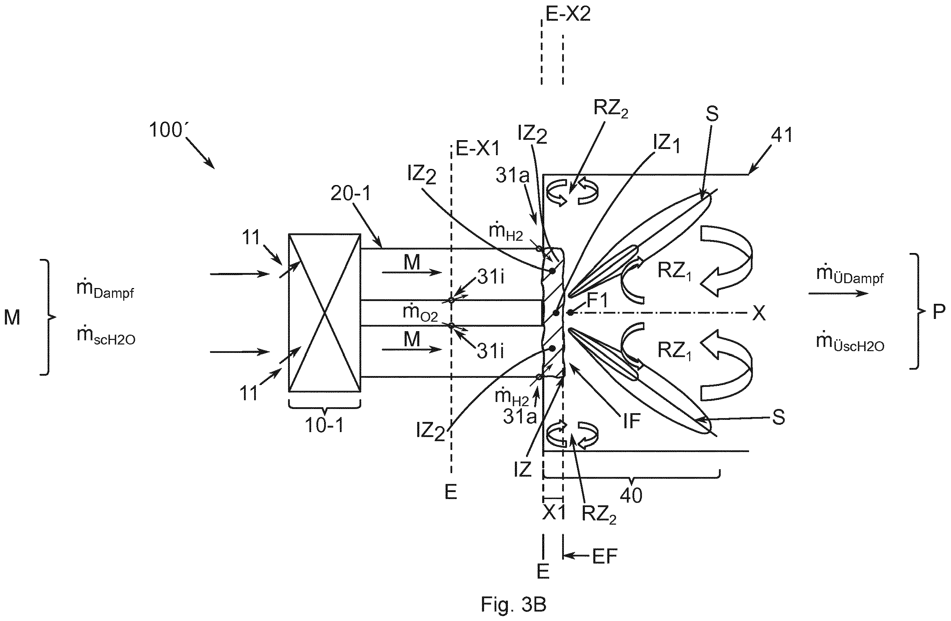

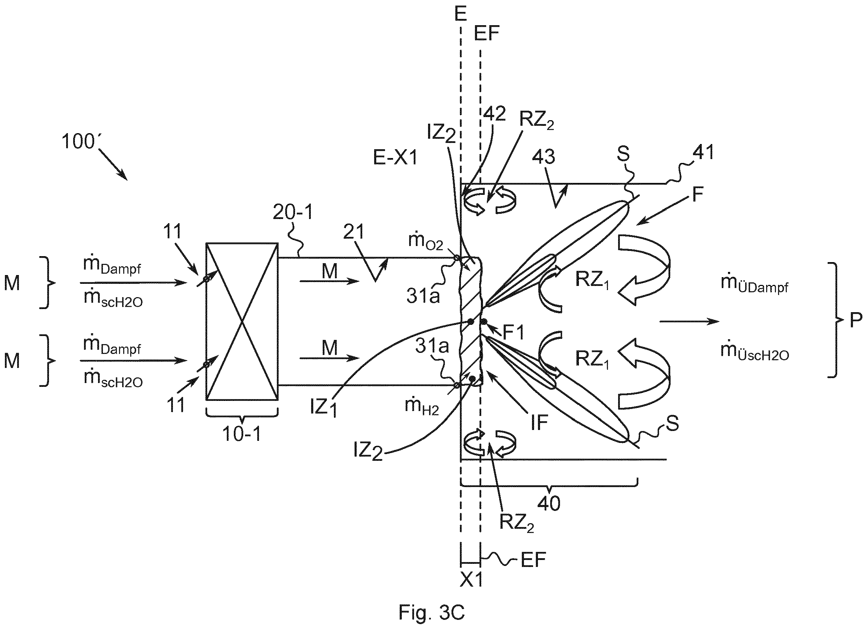

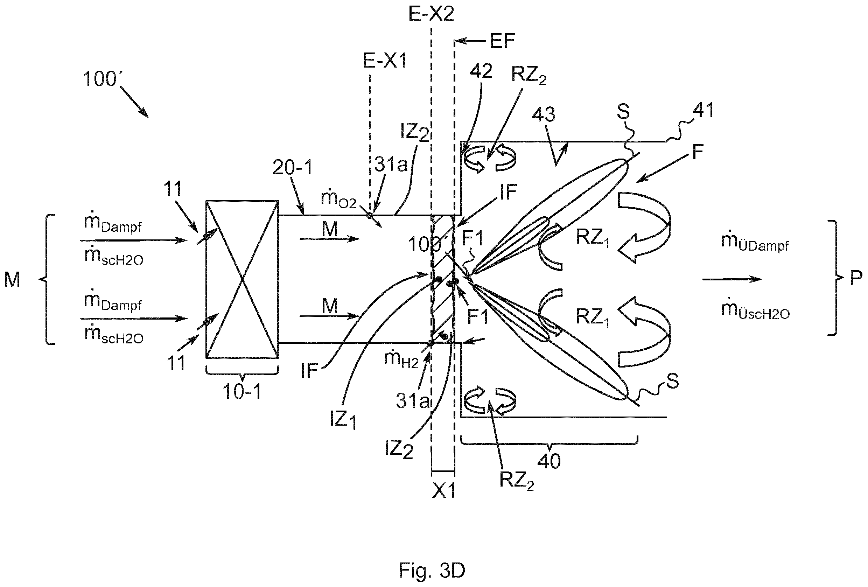

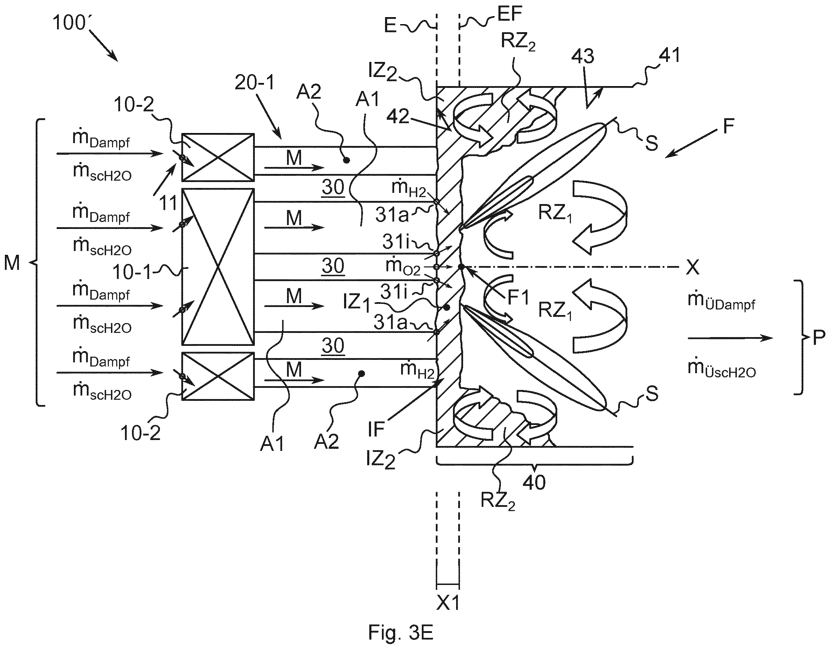

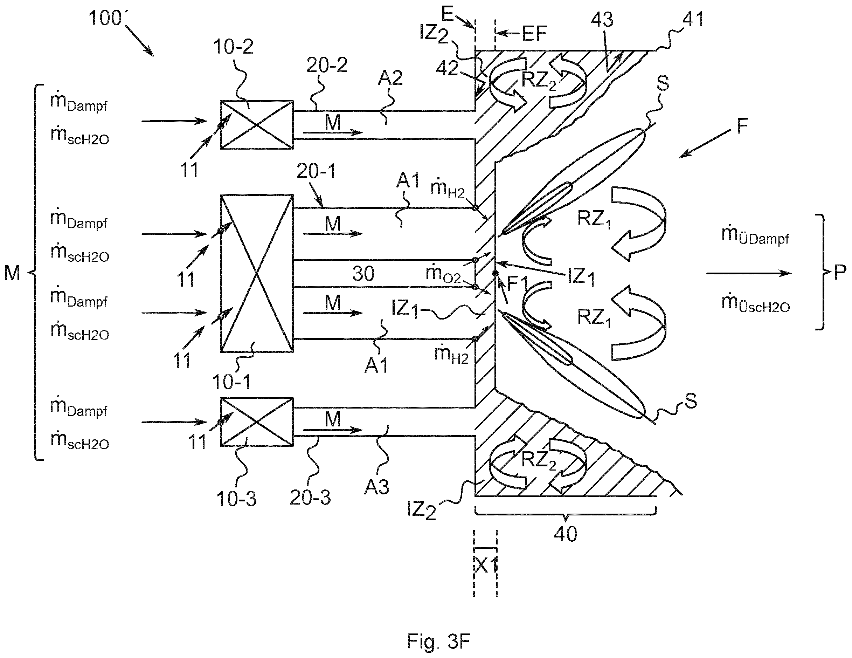

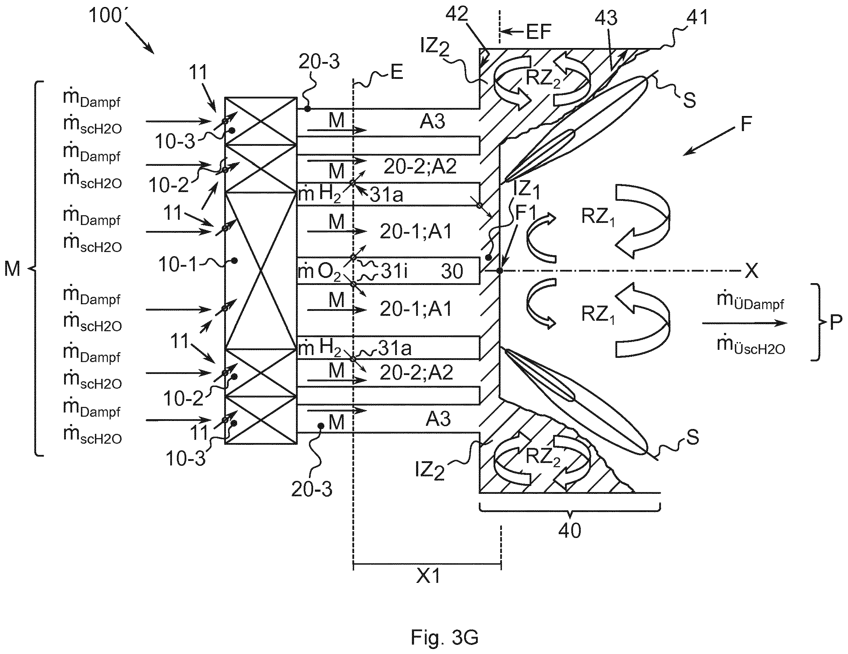

Durch Vergleich der Figuren 1 und 3 und der zugehörigen Beschreibung wird deutlich, dass die erfindungsgemäße Eindüsung von Wasserstoff-H₂ als Brennstoffmedium R-F und von Sauerstoff-0₂ als Oxidationsmedium R-O in der mindestens einen Zuströmvorrichtung 20-1 über die Edukt-Eindüsungsöffnungen 31 vorzugsweise nahe der Brennkammeröffnung der Brennkammer 40 erfolgt.

Mit anderen Worten die Zugabe der Teilmassenströme von Wasserstoff-H₂ als Brennstoffmedium R-F und von Sauerstoff-0₂ als Oxidationsmedium R-O erfolgt nachgeschaltet, der Zugabe des vorgebbaren Teilmassenstroms von überkritischem Wasser *ṁ*_{scH2O} oder Wasserdampf *ṁ*_{Dampf} über den Drallgenerator 10-1 erst in der Zuströmvorrichtung 20-1.

Gemäß der Figur 3A weist die mindestens eine Zuströmvorrichtung 20-1 nur eine einzige Passage A1 auf, in der die Lanze 30 mit lanzenseitigen Edukt-Eindüsungsöffnungen 31i nahe der Brennkammer 40 ausgebildet ist, über die in Figur 3A Sauerstoff-0₂ als Oxidationsmedium R-O eingedüst wird. Diese Passage wird als erste Passage A1 bezeichnet, da die Anordnung von mehreren Passagen, sogenannten weiteren Passagen einen Teil der Erfindung darstellt, wie später noch erläutert wird.

Die mindestens eine Zuströmvorrichtung 20-1 umfasst ferner nahe der Brennkammeröffnung der Brennkammer 40 wandseitige Edukt-Eindüsungsöffnungen 31a über die in Figur 3A Wasserstoff-H₂ als Brennstoffmedium eingedüst wird.

Nahe der Brennkammer 40 heißt, dass die Edukt-Eindüsungsöffnung 31a, 31i mindestens eines Verbrennungseduktes R so nahe an der Brennkammer 40 angeordnet und entsprechend ausgerichtet ist/sind, sodass sich der Flammenfuß F1 der Flamme F erst in der Brennkammer 40 ausbildet. (Vergleiche auch Figur 3B und zugehörige Beschreibung.)

Ein erfindungsgemäßer Brenner 100' kann mehrere Passagen A1, A2, A3 usw. beziehungsweise Annuli aufweisen, wie in den nachfolgenden Ausführungsformen noch detailliert erläutert wird.

Als Passage oder Annulus wird eine Öffnung verstanden, die eine Zuführung der Teilmassenströme des Prozessmediums M, der Verbrennungsedukte R, beziehungsweise der Prozessmedium-Edukt-Gemische MR, die aus einem Prozessmedium M und einem der Verbrennungsedukte R gebildet sind, in die Brennkammer 40 ermöglicht.

Es wird an dieser Stelle darauf hingewiesen, dass es auch möglich ist, über die lanzenseitigen Edukt-Eindüsungsöffnungen 31i einen Teilmassenstrom Wasserstoff-H₂ als Brennstoffmedium R-F und über die wandseitigen Edukt-Eindüsungsöffnungen 31a ein Teilmassenstrom Sauerstoff-0₂ als Oxidationsmedium R-O einzudüsen.

In vielen Anwendungen öffnet sich die Brennkammer 40 wie in Figur 3A dargestellt geometrisch gegenüber der Zuströmvorrichtung 20, sodass sich eine Brennkammerwand 41 ausbildet, die insbesondere eine Brennkammerstirnwand 42 und eine Brennkammerlängswand 43 beziehungsweise Brennkammerlängswände 43 umfasst.

Die innere Zuströmvorrichtungslängswand 21 beziehungsweise die inneren Zuströmvorrichtungslängswände 21 weist/weisen bei Brennern 100 nach dem Stand der Technik im Betrieb Beschädigungen durch das Rückschlagen der Flamme F auf.

Durch die inerten Eigenschaften des Prozessmediums M, insbesondere des Wasserdampfes *ṁ*_{Dampf} wird mit Hilfe des erfindungsgemäßen Brenners 100, 100' ein erfindungsgemäßes Verbrennungsverfahren 100' geschaffen, welches (vergleiche das Verfahren nach dem Stand der Technik gemäß Figur 1B) die Nachteile beseitigt und folgende Schritte umfasst:
Die Erläuterungen erfolgen analog zu der Beschreibung des Verfahrens nach dem Stand der Technik wiederum hinsichtlich des Prozessmediums M am Beispiel von Wasserdampf *ṁ*_{Dampf}, der analog zu überkritischem Wasser ṁ_{scH2O} zum Einsatz kommen kann.

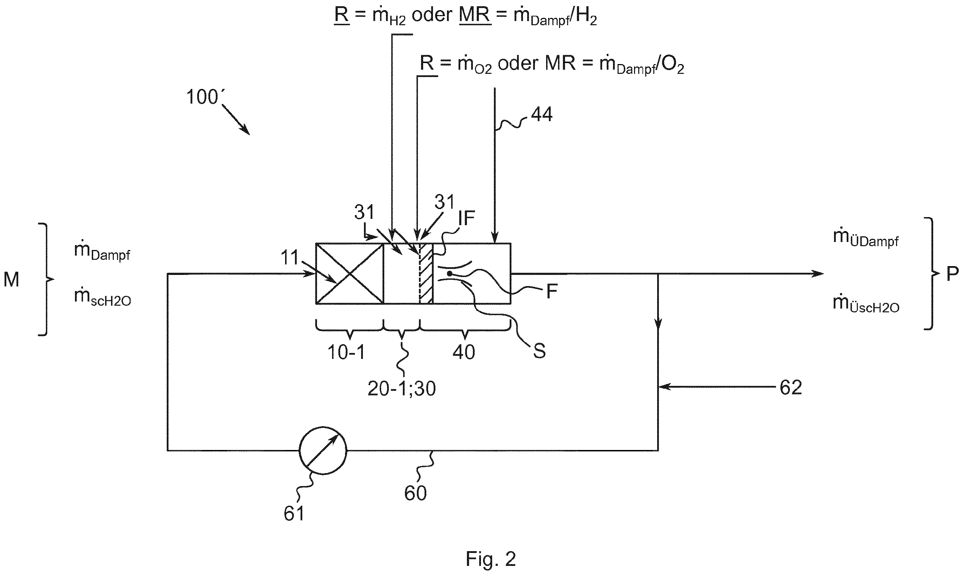

Die nachfolgenden, anhand der Figur 2, als erfindungsgemäße Schritte bezeichneten Verfahrensvorgänge der Erfindung finden im Betrieb des Brenners 100' im Wesentlichen gleichzeitig und kontinuierlich statt.

Dem Drallgenerator 10-1 wird über eine Eindüsungsöffnung in der ersten Ausgestaltung des Verfahrens in einem ersten erfindungsgemäßen Schritt ausschließlich ein vorgebbarer Teilmassenstrom Wasserdampf *ṁ*_{Dampf} als Prozessmedium M beispielsweise mit einer Temperatur von 300°C zugeführt.

In einem zweiten erfindungsgemäßen Schritt wird der Teilmassenstrom Wasserdampf *ṁ*_{Dampf} im Drallgenerator 10-1 mit dem Drall versehen und in die Zuströmvorrichtung 20-1 geleitet, wie anhand der Pfeile links und rechts des Drallgenerators verdeutlicht wird.

In einem dritten erfindungsgemäßen Schritt werden über die Edukt-Eindüsungsöffnungen 31a, 31i die unvermischten Verbrennungsedukte H₂/0₂ - gemäß der ersten Ausführungsvariante a) - zugeführt, die in dem zweiten Schritt durch den bereits verdrallten Teilmassenstrom des Wasserdampfes im Dampf mitgerissen und ebenfalls verdrallt werden.

Die unvermischt in die mindestens eine Zuströmvorrichtung eintretenden Teilmassenströme der Verbrennungsedukte H₂/0₂ - gemäß der ersten Ausführungsvariante a) - somit durch den Teilmassenstrom des Prozessmediums M Wasserdampf *ṁ*_{Dampf} verdrallt, wonach die Verbrennungsedukte R in der Wasserdampfatmosphäre mit dem bereits beschriebenen Flammenbild der Flamme F unter Ausbildung der Scherschicht S verbrennen. Es wird deutlich, dass es prinzipiell ausreicht, dass mindestens ein Teilmassenstrom verdrallt wird.

In den anderen Ausgestaltungen des Verfahren, die in Figur 2 nicht explizit dargestellt sind, werden die bereits genannten Teilmassenströme ebenfalls der mindestens einen Zuströmvorrichtung 20-1 zugeführt, wobei mindestens ein Teilmassenstrom verdrallt wird, wonach die Verbrennungsedukte R ebenfalls in der Wasserdampfatmosphäre mit dem bereits beschriebenen Flammenbild der Flamme F unter Ausbildung der Scherschicht S verbrennen.

Bei der zweiten Ausführungsvariante b) wird das Verfahren so ausgestaltet, dass kein separater Teilmassenstrom des Prozessmediums M benötigt wird, da mindestens eines der Verbrennungsedukte R mit dem Prozessmedium M bereits vor Zuführung in die mindestens eine Zuströmvorrichtung 20-1 vorvermischt ist. Das heißt der Brenner 100, 100' benötigt bei dieser Ausführungsvariante b) die Öffnung 11 nicht. Mindestens einer der beiden Teilmassenströme wird in der Zuströmvorrichtung 20-1 verdrallt.

Bei der dritten Ausführungsvariante c) wird das Verfahren so ausgestaltet, dass ein separater Teilmassenstrom des Prozessmediums M vorgesehen wird, obwohl bereits mindestens eines der Verbrennungsedukte R mit dem Prozessmedium M vor Zuführung in die mindestens eine Zuströmvorrichtung 20-1 vorvermischt ist. Das heißt der Brenner 100, 100' benötigt bei dieser dritten Ausführungsvariante c) die Öffnung 11 zur Zuführung des Prozessmediums M.

Im Unterschied zum Stand der Technik bildet sich in allen Ausführungsvarianten a) bis c) des erfindungsgemäßen Verfahrens, ausgehend von der oder den in Strömungsrichtung zuletzt angeordneten Edukt-Eindüsungsöffnung/en 31 der Flammenfuß F1 der Flamme F um einen Abstand X1 in Strömungsrichtung gesehen versetzt aus.

Mit anderen Worten der Flammenfuß F1 der Flamme F wird durch den gleichzeitig als Prozessmedium M und Inertisierungsmedium eingesetzten Wasserdampf *ṁ*_{Dampf} erst stromab der Edukt-Eindüsungsöffnung/en 31 gebildet, sodass sich an der inneren Einströmöffnung 31i im Bereich des Flammenfußes F1 der Flamme F eine innere Inertisierungszone IZ₁ (vergleiche Figur 3A) ergibt.

Es kommt in vorteilhafter Weise erfindungsgemäß zu dem Effekt, dass es in dem zentralen Bereich der Flamme F, insbesondere im Bereich der inneren Einströmöffnungen 31i eine innere Inertisierungszone IZ₁ gebildet wird, die auch als Inertisierungskernzone der Inertisierungsfront IF bezeichnet wird.

Darüber hinaus kommt es bei einigen Ausführungsformen (vergleiche die Beschreibung zu den Figuren 3E, 3F und 3G) zu dem Effekt, dass sich bei der geometrischen Ausgestaltung der Brennkammer 40 wie dargestellt, bei der sich die Brennkammer 40 hinter der Zuströmvorrichtung 20-1 vergrößert, zwischen der Außenmantelfläche der Flamme F und der Brennkammerstirnwand 42 im Bereich der äußeren Einströmöffnungen 31a ebenfalls eine Inertisierungszone IZ bildet, die als äußere Inertisierungszone IZ₂ ausgebildet ist und bezeichnet wird. In diesen Fällen, bildet die innere Inertisierungszone IZ₁ und die äußere Inertisierungszone IZ₂ gemeinsam die Inertisierungsfront IF.

Die Inertisierungsfront IF bildet mit anderen Worten eine inerte Abschottungsschicht zwischen den Einströmöffnungen 31a, 31i und den die Einströmöffnungen 31a, 31i umgebenden Bereichen und dem Flammenfuß F1 der Flamme F.

Die Erzeugung der Inertisierungsfront IF löst das Problem der gestellten Aufgabe, da in den erläuterten kritischen Bereichen keine lokalen chemischen Reaktionen auftreten und in den erläuterten kritischen Bereichen die Temperatur herab gesetzt wird, sodass keine Beschädigungen an den Düsen und in den die Düsen umgebenden Bereichen auftreten.

Die Inertisierungsfront IF mit der inneren Inertisierungszone IZ₁ (vergleiche die Figuren 3A, 3B, 3C und 3D sowie zugehörige Beschreibung) beziehungsweise mit der äußeren und inneren Inertisierungszone IZ₁, IZ₂ (vergleiche die Figuren 3A, 3F, und 3G sowie zugehörige Beschreibung) sind in den Figuren schraffiert dargestellt.

Erfindungsgemäß bildet sich erst hinter der Inertisierungsfront IF in einem erfindungsgemäßen vierten Schritt die Rezirkulationszone RZ am Flammenfuß F1 der Flamme F aus, im Detail mit der inneren Rezirkulationszone RZ₁ und der äußeren Rezirkulationszone RZ₂ aus, in deren Scherschicht S sich die brennende Flamme F bildet und entsprechend stabilisiert.

In der Brennkammer 40 wird der Wasserdampf *ṁ*_{Dampf} in einem fünften Schritt auf beispielsweise 900°C erhitzt, wobei die Verbrennungsedukte R in der durch den Drallgenerator 10-1 erzeugten Scherschicht S der verdrallten Strömung des Wasserdampfes *ṁ*_{Dampf} so gut vermischt sind, dass in der Brennkammer 40 ein guter Ausbrand erreicht wird, wodurch schließlich ein überhitzter Dampf *ṁ*_{ÜDampf} mit hohem Reinheitsgrad erzeugt wird.

Es hat sich heraus gestellt, dass eine Vermischung von Wasserstoff-H₂ als Brennstoffmedium R-F und Wasserdampf *ṁ*_{Dampf} im Drallgenerator 10-1 nicht zwingend notwendig ist, um einen optimalen Ausbrand zu gewährleisten. Entscheidend ist die Ausbildung der Scherschicht S. Die durch den Drallgenerator 10-1 erzeugte Scherschicht S der insgesamt verdrallten Strömung mindestens eines der Teilmassenströme, insbesondere des Teilmassenstromes des Wasserdampfes *ṁ*_{Dampf} wirkt in die Brennkammer 40 hinein. Mit anderen Worten die Inertisierungsfront IF behindert die Ausbreitung der Flamme F mit dem gewünschten Drall hinter der Inertisierungsfront IF nicht, wodurch der optimale Ausbrand unter Ausbildung der Rezirkulationszonen RZ₁, RZ₂ sichergestellt ist.

In der ersten bevorzugten Ausführungsform gemäß Figur 3A sind die inneren Einströmöffnungen 31i und die äußeren Einströmöffnungen 31a in einer gedachten Ebene E angeordnet, die orthogonal - in radialer Richtung - zur Drallachse X des Brenners 100' verläuft. Es wurde heraus gefunden, dass mit einer nicht versetzten Anordnung der inneren und äußeren Einströmöffnungen 31i, 31a in einer Ebene E und insbesondere nahe der Brennkammer 40 eine wirksame Inertisierungsfront IF gebildet werden kann.

Es wurde ebenfalls herausgefunden, dass die axiale Länge der mindestens einen Zuströmvorrichtung 20-1 variabel ist.

In diesem Zusammenhang wird vorgeschlagen, den Brenner 100' modular (zweiteilig) auszubilden, wobei ein Drallgenerator 10-1 und die Zuströmvorrichtung 20-1 jeweils ein Modul ausbilden, wodurch eine höhere Variabilität erreicht wird.

In einer zweiteiligen Ausgestaltung ist die Zuströmvorrichtung 20-1 gemäß einer Ausgestaltung i) beispielsweise vor dem Drallgenerator 10-1 und in einer weiteren zweiteiligen Ausgestaltung ist die Zuströmvorrichtung 20-1 gemäß einer Ausgestaltung iii) beispielsweise hinter dem Drallgenerator 10-1 angeordnet. Es versteht sich, dass diese Ausgestaltungen auch einteilig sein können.

In einer anderen Ausgestaltung wird vorgeschlagen, die Zuströmvorrichtung 20-1 gemäß einer weiteren Ausgestaltung ii) in den Drallgenerator 10-1 vorzugsweise einteilig zu integrieren, sodass der Brenner 100' einteilig ist. In einer solchen Ausgestaltung ist die Zuströmvorrichtung 20-1 weder vor noch hinter dem Drallgenerator 10-1 und auch nicht zwischen dem Drallgenerator 10-1 und der Brennkammer 40 angeordnet, wodurch ein kompakterer Brenner 100' geschaffen wird.

Das Verfahren zeichnet sich insbesondere noch dadurch aus (vergleiche Figur 2), dass ein Teilmassenstrom des Verbrennungsproduktes P am Ausgang der Brennkammer 40, insbesondere ein Teilmassenstrom des überhitzten Wasserdampfes ṁ_{ÜDampf} oder des überhitzten überkritischem Wassers ṁ_{ÜscH2O} bypassartig abgezweigt und durch Zugabe eines Kühlmediums, insbesondere Wasser mit geringerer Temperatur als das Verbrennungsendprodukt P) über eine Bypass-Zuführleitung 62 einer Bypass-Rückführleitung 60 herunter gekühlt und wieder in den Brenner 100, 100' gefördert wird.

Es wird somit ein weiterer Verfahrensschritt durchgeführt, nämlich die Rückführung des Verbrennungsproduktes P über eine Bypass-Rückführleitung 60, insbesondere über eine in der Bypass-Rückführleitung 60 angeordnete Bypass-Fördereinrichtung 61, die insbesondere eine Pumpe ist. Diese Dampfrückführung steht als optionaler Verfahrensschritt zur Verfügung.

Darüber hinaus kann optional vorgesehen werden, dass der überhitzte Wasserdampf ṁÜ_{Dampf} oder das überhitzte überkritische Wassers ṁ_{ÜscH2O} bereits in der Brennkammer 40 thermisch durch eine weitere Zuführleitung beeinflusst, insbesondere gekühlt wird, wodurch sich gleichzeitig die erzeugte Menge des Prozessmediums erhöht.

An der Brennkammer 40 wird dazu eine Brennkammer-Zuführleitung 44 angeordnet, über die ein Kühlmedium, insbesondere Wasser mit gegenüber dem überhitzten Wasserdampf ṁ_{ÜDampf} oder dem überhitzten überkritischen Wassers ṁ_{ÜscH2O} geringerer Temperatur zugeführt wird, sodass der überhitzte Wasserdampf ṁ_{ÜDampf} oder das überhitzte überkritische Wassers ṁ_{ÜscH2O} bereits in der Brennkammer 40 herunter gekühlt werden kann.

Die optionalen Verfahrensschritte können miteinander kombiniert werden oder sind unabhängig voneinander realisierbar.

Zweite Ausführungsform gemäß Figur 3B:
Die Figur 3B zeigt in einer schematischen prinzipiellen Schnittdarstellung einen erfindungsgemäßen Brenner 100' in einer zweiten Ausführungsform.

Bei dieser zweiten Ausführungsform wird gemäß der ersten Ausführungsvariante a) ein Teilmassenstrom unvermischtes Verbrennungsedukt R-F, insbesondere Wasserstoff-H₂ als Brennstoffmedium R-F über die wandseitigen Edukt-Eindüsungsöffnungen 31a der Zuströmvorrichtung 20-1 zugeführt.

Ferner wird der Zuströmvorrichtung 20-1 unvermischter Sauerstoff-0₂ als Oxidationsmedium R-O über die lanzenseitiger Edukt-Eindüsungsöffnungen 31i zugeführt, sodass erst in der Zuströmvorrichtung 20-1 ein Prozessmedium-Edukt-Gemisch MRR-O aus dem Teilmassenstrom Sauerstoff-0₂ als Oxidationsmedium R-O und dem Teilmassenstrom des Prozessmediums M gebildet wird, da der Zuströmvorrichtung 20-1 ebenfalls über die im Drallgenerator 10-1 integrierte Prozessmedium-Zuführungsöffnung 11, der Zuströmvorrichtung 20-1 Prozessmedium M separat zugeführt wird.

Wie bereits zur ersten Ausführungsform gemäß Figur 3A erläutert, sind die inneren und äußeren Edukt-Eindüsungsöffnungen 31a, 31i mindestens eines Verbrennungseduktes R so nahe an der Brennkammer 40 angeordnet und derart ausgerichtet, sodass sich der Flammenfuß F1 der Flamme F erst in der Brennkammer 40 ausbildet.

Die inneren Edukt-Eindüsungsöffnungen 31i in der zweiten Ausführungsform gemäß Figur 3B sind in Strömungsrichtung gesehen vor den äußeren Edukt-Eindüsungsöffnungen 31a angeordnet.

Die inneren Einströmöffnungen 31i sind in einer gedachten Ebene E-X1 angeordnet, die orthogonal zu der Drallachse X des Brenners 100' verläuft, wobei die gedachte Ebene E-X1 in Strömungsrichtung gesehen vor der gedachten Ebene E-X2 der äußeren Einströmöffnungen 31a liegt.

Es versteht sich, dass auch eine Anordnung möglich ist, bei der die äußeren Einströmöffnungen 31a in einer gedachten Ebene E-X1 angeordnet sind, die orthogonal zu der Drallachse X des Brenners 100' verläuft, und die gedachte Ebene E-X1 in Strömungsrichtung gesehen vor der gedachten Ebene E-X2 der inneren Einströmöffnungen 31i liegt.

Es wird deutlich, dass die Edukt-Eindüsungsöffnungen 31a, 31i mindestens eines Verbrennungseduktes R dabei so nahe an der Brennkammer 40 angeordnet und entsprechend ausgerichtet sind, sodass sich der Flammenfuß F1 der Flamme F mit der davor liegender Inertisierungsfront IF erst in der Brennkammer 40 ausbildet.

Eine solche Anordnung ist als Ausführungsform möglich, da die Verbrennungsedukte H₂/0₂ getrennt voneinander (gegebenenfalls wird wie in der zweiten Ausführungsform gemäß Figur 3B dargestellt ist, beispielsweise der Teilmassenstrom Sauerstoff-0₂ als Oxidationsmedium R-O noch in der Zuströmvorrichtung 20-1 mit dem Prozessmediums M zu dem Prozessmedium-Edukt-Gemische MRR-O gemischt) erst hinter der gedachten Ebene E-X2 der äußeren Einströmöffnungen 31a zusammen kommen, sodass die örtliche Ausbildung der Flamme F mit ihrem Flammenfuß F1 analog zu Figur 3A und die Ausbildung der Inertisierungsfront IF analog zu Figur 3A gewährleistet ist.

Es wird noch einmal darauf hingewiesen, dass es auch anders als in Figur 3B dargestellt möglich ist, über die lanzenseitigen Edukt-Eindüsungsöffnungen 31i Wasserstoff-H₂ als Brennstoffmedium R-F und über die wandseitigen Edukt-Eindüsungsöffnungen 31a Sauerstoff-0₂ als Oxidationsmedium R-O einzudüsen.

Eine versetzte Anordnung der Edukt-Eindüsungsöffnungen 31a, 31i gemäß der zweiten Ausführungsform kann von Vorteil sein, da der Wasserdampf ṁ_{Dampf} dann in der Zuströmvorrichtung 20-1 entweder mit Wasserstoff-H₂ als Brennstoffmedium R-F und/oder mit Sauerstoff-0₂ als Oxidationsmedium R-O gemischt werden kann, bevor die Verbrennungsedukte H2/02 hinter der stromab liegenden letzten gedachten Ebene E-X2 hinter der Inertisierungsfront IF aufeinander treffen und miteinander reagieren.

Dritte Ausführungsform gemäß Figur 3C:
Die Figur 3C zeigt in einer schematischen prinzipiellen Schnittdarstellung einen erfindungsgemäßen Brenner 100' in einer dritten Ausführungsform.

Durch die Figur 3C wird verdeutlicht, dass je Verbrennungsedukt R je eine Einströmöffnung 31 ausreicht, um Wasserstoff-H₂ als Brennstoffmedium und Sauerstoff-0₂ als Oxidationsmedium der Brennkammer 40 zuzuführen.

Damit wird herausgestellt, dass nicht zwingend eine symmetrische Anordnung, insbesondere keine rotationssymmetrische Anordnung von Einströmöffnungen 31 für das jeweilige Verbrennungsedukt R in der Zuströmvorrichtung 20-1 notwendig ist.

In der dritten Ausführungsform ist gemäß der ersten Ausführungsvariante a) jeweils als äußere Einströmöffnung 31a eine Einströmöffnung 31a für Wasserstoff-H₂ als Brennstoffmedium R-F und eine äußere Einströmöffnung 31a für Sauerstoff-0₂ als Oxidationsmedium R-O vorgesehen.

Die Einströmöffnungen 31a liegen dabei analog zu der Figur 3A und zugehöriger Beschreibung auf einer Ebene E. Die Drallbildung des Teilmassenströme am Ausgang der Zuströmvorrichtung 20-1 wird wiederum durch das Verdrallen des Prozessmediums M durch den Drallgenerator 10-1 erreicht, sodass sich das Flammenbild der Flamme F und die bereits im Zusammenhang der Beschreibung der Figur 3A beschriebenen Effekte nicht ändern.

Das Flammenbild der Flamme F und die Inertisierungsfront IF werden analog ausgebildet, wie durch den Vergleich der Figur 3C mit der Figur 3A oder der Figur 3B deutlich wird. Dadurch wird auch deutlich, dass eine Lanze, die in den Figuren 3A und 3B dargestellt ist, zur Eindüsung eines Verbrennungseduktes R nicht zwingend notwendig ist.

Vierte Ausführungsform gemäß Figur 3D:
Die Figur 3D zeigt in einer schematischen prinzipiellen Schnittdarstellung einen erfindungsgemäßen Brenner 100' in einer vierten Ausführungsform.

In einer von der Figur 3C abweichenden vierten Ausführungsform, die ebenfalls nach der Ausführungsvariante a) ausgebildet ist, sind die als äußere Einströmöffnungen 31a ausgebildeten Einströmöffnungen für den Teilmassenstrom Wasserstoff-H₂ als Brennstoffmedium R-F und den Teilmassenstrom Sauerstoff-0₂ als Oxidationsmedium R-O analog zu der Figur 3D in Strömungsrichtung gesehen nicht in einer Ebene E-X1, E-X2 angeordnet.

Eine der äußeren Edukt-Eindüsungsöffnungen 31a der Verbrennungsedukte R ist in Strömungsrichtung gesehen vor der anderen äußeren Edukt-Eindüsungsöffnung 31a angeordnet. Damit wird verdeutlicht, dass auch eine solche Ausführungsform möglich ist, wobei die Drallbildung analog zu den vorhergehenden Ausführungsformen durch die Verdrallung des Teilmassenstroms des Prozessmediums M durch den Drallgenerator 10-1 erreicht wird, sodass sich das Flammenbild der Flamme F und die bereits beschriebenen Effekte nicht ändern.

Das Flammenbild der Flamme F und die Inertisierungsfront IF werden analog ausgebildet, wie insbesondere durch den Vergleich der Figur 3D mit der Figur 3C deutlich wird. Auch bei dieser vierten Ausführungsform ist sicher gestellt, dass mindestens eine der äußeren Edukt-Eindüsungsöffnungen 31a der Verbrennungsedukte R so nahe an der Brennkammer 40 angeordnet ist/sind und entsprechend ausgerichtet ist/sind, sodass sich der Flammenfuß F1 der Flamme F erst in der Brennkammer 40 ausbildet.

In der in Figur 3D gezeigten prinzipiellen Schnittdarstellung des Brenners 100' findet als Effekt dieser Ausführungsform eine Vermischung von Wasserstoff-H₂ als Brennstoffmedium R-F Sauerstoff-0₂ als Oxidationsmedium R-O mit dem Wasserdampf ṁ_{Dampf} statt, bevor die Gemische MRR-F und MRR-O (ṁ_{Dampf}/H₂ beziehungsweise ṁ_{Dampf}/O₂) in die Brennkammer 40 eintreten. Das kann positive Effekte haben, der darin bestehen, dass eine noch kürzere Ausbrandzeit, eine noch bessere Vermischung und damit ein noch besser Ausbrand der Verbrennungsedukte R erreicht werden.

Außerdem ist durch den unterschiedlichen vorgebbaren axialen Abstand (in Längsrichtung X gesehen) der äußeren Edukt-Eindüsungsöffnungen 31a die Zeit steuerbar bis zu der das jeweilige Gemisch ṁ_{Dampf}/H₂ oder ṁ_{Dampf}/O₂ in die Brennkammer 40 eintritt. Hierdurch kann variabel auf bestimmte Randbedingungen reagiert werden. Je nachdem welches Verbrennungsedukt R in Strömungsrichtung gesehen zuerst in die äußeren Edukt-Eindüsungsöffnungen 31a eingedüst wird, kann entweder das ṁ_{Dampf}/H₂ Gemisch MRR-F oder das ṁ_{Dampf}/O₂ Gemisch MRR-O in vorteilhafter Weise einer längeren Vermischungszeit unterzogen werden, bevor es in die Brennkammer 40 eintritt.

Fünfte Ausführungsform gemäß Figur 3E:
Eine Zuströmvorrichtung 20-1 mit zwei Passagen A1, A2.

Die Figur 3E zeigt in einer schematischen prinzipiellen Schnittdarstellung einen erfindungsgemäßen Brenner 100' in einer fünften Ausführungsform. Diese fünfte Ausführungsform beschreibt eine einzige, die sogenannte erste Zuströmvorrichtung 20-1 mit zwei Passagen einer ersten Passage A1 und einer zweite Passage A2.

Es hat sich herausgestellt, dass es in der äußere Rezirkulationszone RZ₂ gegenüber der inneren Rezirkulationszone RZ₁ durch eine schlechtere Vermischung und Wandeffekte zu einer etwas schlechteren chemischen Reaktion bei der Verbrennung der Verbrennungsedukte R-F, R-O kommt.

Um die äußere Rezirkulationszone RZ₂ zusätzlich zu der Ausbildung der äußeren Inertisierungszone IZ₂ mit dem Inertisierungsmedium, insbesondere Wasserdampf ṁ_{Dampf} oder überkritisches Wasser *ṁ*_{scH2O} aufzufüllen, wird der Brennkammer 40 beispielsweise an der Brennkammerstirnwand 42 ein zusätzlicher, insbesondere ein koaxialer Wasserdampf-Teilmassenstrom ṁ_{zDampf} Oder überkritischem Wasser *ṁ*_{zscH2O} zugeführt.

Der zusätzliche Teilmassenstrom ist Teil eines Gesamtmassenstroms, der sich aus dem Teilmassenstrom von Wasserdampf ṁ_{Dampf} oder überkritischem Wasser *ṁ*_{zscH2O} und dem Zusatzteilmassenstrom Wasserdampf ṁ_{zDampf} beziehungsweise oder überkritischem Wasser *ṁ*_{zscH2O} und der Teilmassenströme der Verbrennungsedukte R-F, R-O beziehungsweise Prozessmedium-Edukt-Gemische MRR-F, MRR-O zusammensetzt.

Zur Zuführung des zusätzlichen Teilmassenstroms ṁ_{zDampf}, *ṁ*_{zscH2O} werden folgende Anordnungen vorgeschlagen.

Die erste Zuströmvorrichtung 20-1 weist mindestens eine weitere separate Passage A2 auf über die dem Brennraum 40 mindestens ein zusätzlicher Teilmassenstrom Wasserdampf ṁ_{zDampf} oder überkritisches Wasser *ṁ*_{zscH2O} zugeführt wird.

Bei dieser fünften Ausführungsform ist die mindestens eine separate weitere Passage A2 Teil der ersten Zuströmvorrichtung 20-1, wie in Figur 3E schematisch dargestellt ist.

Der Brenner 100' gemäß der fünften Ausführungsform weist beispielsweise eine rotationssymmetrische ringförmige erste Passage A1 mit einer auf der Längsmittelachse beziehungsweise Drallachse X liegenden Lanze 30 auf. Ferner weist der Brenner 100' gemäß der fünften Ausführungsform eine ringförmige weitere Passage A2 auf, die rotationssymmetrisch die erste Passage A1 umschließt.

Im Ausführungsbeispiel gemäß der fünften Ausführungsform ist der weiteren Passage A2 ein eigener Drallgenerator 10-2 zugeordnet. Wie erwähnt ist die Anordnung eines zusätzlichen Drallgenerators eine optionale Ausführung.

Um das gewünschte Strömungsbild mit innerer und äußerer Rezirkulationszone RZ₁, RZ₂ der Flamme F in der Brennkammer 40 zu erreichen, muss von allen angeordneten Zuström-Passagen A1, A2 usw. mindestens ein Teilmassenstrom in einer der Passagen A1, A2 eine ausreichend hohe Drallkomponente aufweisen.

Mit anderen Worten könnte nur der Teilmassenstrom in der zweiten Passage A2 einen Drallgenerator 10-2 aufweisen und der Teilmassenstrom in der ersten Passage A1 weist keinen Drallgenerator 10-1 auf oder umgekehrt.

Ferner können die Teilmassenströme in beiden Passagen, in der ersten Passage A1 und in der zweiten Passage A2 jeweils einen Drallgenerator 10-1 und 10-2 aufweisen, deren Drall darüber hinaus gleich oder entgegengesetzt sein kann.

Aus Figur 3E wird noch deutlich, dass die Passagen A1, A2 nicht zwingend, jedoch vorzugsweise koaxial angeordnet sind.

Die Ausgestaltung gemäß der fünften Ausführungsform führt dazu, dass die sich bildende äußere Rezirkulationszone RZ₂ in der eine eher schlechte chemische Reaktion zu erwarten ist, über die zweite Passage A2 stärker mit Wasserdampf ṁ_{Dampf} oder eben überkritischem Wasser *ṁ*_{scH2O} gefüllt wird, sodass sich hier weder unverbrannter Wasserstoff-H₂ als Brennstoffmedium R-F, Sauerstoff-0₂ als Oxidationsmedium R-O oder ṁ_{Dampf}/H₂ Gemische MRR-F oder das ṁ_{Dampf}/O₂ Gemische MRR-O sammeln können.

In der fünften Ausführungsform sind die inneren Einströmöffnungen 31i und die äußeren Einströmöffnungen 31a analog zu den Figuren 3A oder 3C und zugehörigen Beschreibungen in einer gedachten Ebene E angeordnet, die orthogonal zu der Drallachse X des Brenners 100' verläuft. Eine versetzte Anordnung in verschiedenen Ebenen E-X1, E-X2 ist möglich.

Sechste Ausführungsform gemäß Figur 3F:
Drei Zuströmvorrichtungen 20-1, 20-2, 20-3 mit je einer Passage A1, A2, A3.

Die Figur 3F zeigt in einer schematischen prinzipiellen Schnittdarstellung einen erfindungsgemäßen Brenner 100' in einer sechsten Ausführungsform.

Die Figur 3F verdeutlicht, dass es möglich ist, den Brenner 100, 100' und das Verfahren variabel zu gestalten, wobei dazu der Brenner 100' eine bestimmte Ausgestaltung aufweist, die nachfolgend erläutert wird.

Es wird vorgeschlagen, den Brenner 100' gemäß der sechsten Ausführungsform mit mehreren - nicht rotationssymmetrischen - Zuströmvorrichtungen 20-1, 20-2, 20-3, insbesondere mit koaxialer Ausrichtung auszubilden. Jeder Zuströmvorrichtung 20-1, 20-2, 20-3 ist mindestens eine Passage A1, A2, A3 zugeordnet.

Dadurch können für die Teilmassenströme in den mehreren Zuströmvorrichtungen 20-1, 20-2, 20-3 beziehungsweise Passagen A1, A2, A3 unterschiedliche Drallzahlen und/oder Drallrichtungen und/oder Edukt-Konzentrationen der Verbrennungsedukte R-F, R-O und/oder Gemisch-Konzentrationen MRR-F, MRR-O unter Ausbildung sich unterscheidender Scherschichten S bewirkt werden. In den Scherschichten weist die Flamme F in der Brennkammer 40 mit unterschiedliche Eigenschaften auf, wie eine gezielte radiale Verteilung der Verbrennungsedukte R-F, R-O und/oder Gemisch-Konzentrationen MRR-F, MRR-O und/oder unterschiedlichen Drall und/oder der verschiedene axiale Geschwindigkeiten in der Brennkammer 40 auf.

Außerdem kann durch die Beeinflussung der Teilmassenströme in den mehreren Passagen A1, A2, A3 innerhalb der Brennkammer 40 eine bestimmte spezifische Strömungsgeometrie der Flamme F erzeugt werden.

Bezüglich der Drallrichtung und/oder der Drallzahl um die jeweilige Drallachse besteht bei mehreren Passagen A1, A2, A3 insbesondere die effektive Möglichkeit den jeweiligen Drall der Teilmassenströme unabhängig voneinander jeweils für sich in die eine oder andere Richtung zu erzeugen bzw. die Drallzahl vorzugeben.

Bei nur einer einzigen Passage A1 in einer Zuströmvorrichtung 20-1 kann zwar die Drallrichtung gewählt werden, wodurch sich die Qualität der Mischung der Verbrennungsedukte R beziehungsweise die Qualität der Mischung der Verbrennungsedukte R mit dem Prozessmedium M nicht ändert.

Sind jedoch mehrere Passagen A1, A2, A3 in einer Zuströmvorrichtung 20-1 oder in mehreren Zuströmvorrichtungen 20-1, 20-2, 20-3 ausgebildet, insbesondere eine erste Passage A1 und mindestens eine weitere Passage A2, beziehungsweise wie in der sechsten Ausführungsform drei Passagen A1, A2, A3 und stehen die Passagen A1, A2, A3 jeweils mit einem eigenen Drallgenerator 10-1, 10-2, 10-3 in Wirkverbindung dann kann die Drallrichtung und/oder die Drallzahl der Teilmassenströme gewählt werden. Die Drallrichtung kann in den verschiedenen möglichen Varianten variabel gleichgerichtet oder entgegengesetzt rotierend ausgebildet werden, wodurch in vorteilhafter Weise die Qualität der Mischung der Verbrennungsedukte R beziehungsweise die Qualität der Mischung der Verbrennungsedukte R-F, R-O beziehungsweise der Prozessmedium-Edukt-Gemische MRR-F, MRR-O mit dem Prozessmedium M und in Abhängigkeit der gewählten Drallrichtungen in den drei Passagen A1, A2, A3 die Strömungsgeometrie der Flamme F beeinflusst werden kann.

In der sechsten Ausführungsform sind die inneren Einströmöffnungen 31i und die äußeren Einströmöffnungen 31a analog zu der Figur 3E und zugehöriger Beschreibung in der ersten Passage A1 der Zuströmvorrichtung 20-1 in einer gedachten Ebene E angeordnet, die orthogonal zu der Drallachse X des Brenners 100' verläuft.

In den Passagen A2, A3 der Zuströmvorrichtungen 20-2, 20-3 gehören, werden in der dargestellten sechsten Ausführungsform In bevorzugter Ausgestaltung der Erfindung keine Verbrennungsedukte R-F, R-O, sondern nur das Prozessmedium M, insbesondere Wasserdampf ṁ_{zDampf} oder überkritisches Wasser *ṁ*_{zscH2O} zugeführt.

Es besteht optional auch die Möglichkeit der Brennkammer 40 in mindestens einer der weiteren Passagen A2, A3 der Zuströmvorrichtungen 20-2, 20-3 über nicht näher dargestellte Eindüsungsöffnungen 31 Verbrennungsedukte R-F, R-O beziehungsweise Prozessmedium-Edukt-Gemische MRR-F, MRR-O zuzuführen.

Siebente Ausführungsform gemäß Figur 3G:
Drei rotationssymmetrische Zuströmvorrichtungen 20-1, 20-2, 20-3 mit je einer Passage A1, A2, A3.

Die Figur 3G zeigt in einer schematischen prinzipiellen Schnittdarstellung einen erfindungsgemäßen Brenner 100' in einer siebenten Ausführungsform. Die siebente Ausführungsform stellt eine spezielle Variante der sechsten Ausführungsform dar.

Es wurde bereits vorgeschlagen, den Brenner 100' gemäß der sechsten Ausführungsform mit mehreren weiteren Passagen A1, A2, A3, insbesondere mit koaxialer Ausrichtung auszubilden.

Gemäß der siebenten Ausführungsform werden um die erste Passage A1 der Zuströmvorrichtung 20-1 herum, insbesondere rotationssymmetrisch zur Zuströmvorrichtung 20-1 und zur Brennkammer 40 mehrere weitere Zuströmvorrichtungen 20-2, 20-3 angeordnet.

Dadurch können ebenfalls in den mehreren Passagen A1, A2, A3 der mehreren Zuströmvorrichtungen 20-1, 20-2, 20-3 unterschiedliche Drallrichtungen und/oder Drallzahlen und/oder Edukt-Konzentrationen und/oder Gemisch-Konzentrationen in sich unterschiedlich ausbildenden verschiedene Scherschichten S mit unterschiedlichen Eigenschaften oder eine gezielte radiale Verteilung der Verbrennungsedukte R-F, R-O beziehungsweise Prozessmedium-Edukt-Gemische MRR-F, MRR-O in axialer Strömungsrichtung gesehen in der Brennkammer 40 bewirkt werden.

Außerdem kann bei dieser siebenten Ausführungsform in vorteilhafter Weise durch die Teilmassenströme in den mehreren Passagen A1, A2, A3 der mehreren Zuströmvorrichtungen 20-1, 20-2, 20-3 innerhalb der Brennkammer 40 leichter eine bestimmte spezifische rotationssymmetrische Strömungs- und Flammengeometrie der Flamme F erzeugt werden.

In Figur 3G ist ferner verdeutlicht, dass in der ersten Passage A1 die Edukt-Konzentration des Sauerstoff O₂-Teilmassenstroms durch Zuführung von Wasserdampf ṁ_{Dampf} oder überkritischem Wasser *ṁ*_{scH2O} innerhalb der Zuströmvorrichtung 20-1 verändert wird, sodass ein vorgebbarer Teilmassenstrom beim Eintritt in die Brennkammer 40 als Wasserdampf/Sauerstoff-Gemisch *ṁ*_{Dampf}/O₂ insbesondere als Prozessmedium-Edukt-Gemisch MRR-O noch in der Zuströmvorrichtung 20-1 erzeugt wird.

Der Effekt entspricht der bereits beschriebenen Vorvermischung von Sauerstoff-0₂ als Oxidationsmedium R-O mit dem Wasserdampf ṁ_{Dampf} oder überkritischem Wasser *ṁ*_{zscH2O} zu dem Prozessmedium-Edukt-Gemisch MRR-O bevor der Teilmassenstrom ṁ_{Dampf}/O₂ in die Zuströmvorrichtung 20-1 eintritt.

In Figur 3G ist weiter verdeutlicht, dass in der zweiten Passage A2 die Edukt-Konzentration des Verbrennungseduktes R-F des Teilmassenstroms ṁ_{Dampf}/H₂ durch Zuführung von Wasserdampf ṁ_{zDampf} oder überkritischem Wasser *ṁ*_{zscH2O} ebenfalls innerhalb der zweiten Zuströmvorrichtung 20-2 verändert werden kann, sodass ein vorgebbarer Teilmassenstrom des Verbrennungseduktes R-F beim Eintritt in die Brennkammer 40 schließlich als Prozessmedium-Edukt-Gemisch MRR-H als Wasserdampf/Wasserstoff-Gemisch *ṁ*_{Dampf}/H₂ vorliegt.

In der dritten weiteren Passage A3 wird der Brennkammer 40 beispielsweise, insbesondere zur Ausbildung der äußeren Inertisierungszone iZ₂ hinsichtlich Größe und Form ausschließlich ein vorgebbarer zusätzlicher Teilmassenstrom Wasserdampf ṁ_{zDampf} oder ein zusätzlicher Teilmassenstrom überkritischen Wassers *ṁ*_{zscH2O} zugeführt.

Jeder Passage A1, A2, A3 ist gemäß der schematischen prinzipiellen Schnittdarstellung jeweils mindestens ein Drallgenerator 10-1, 10-2, 10-3 zugeordnet, sodass beispielsweise die Drallzahlen und/oder Drallrichtungen wie bereits zu der sechsten Ausführungsform erläutert in den Passagen A1, A2, A3 in vorteilhafter Weise variabel separat festgelegt werden können.

Die anderen zu der sechsten Ausführungsform genannten Vorteile und Effekte gelten entsprechend auch für diese siebente Ausführungsform.

In der sechsten Ausführungsform gemäß Figur 3F sind die inneren Einströmöffnungen 31i und die äußeren Einströmöffnungen 31a beispielsweise analog zu der Figur 3E und zugehöriger Beschreibung in der ersten Passage A1 der ersten Zuströmvorrichtung 20-1 in einer gedachten Ebene E angeordnet, die orthogonal zu der Drallachse X des Brenners 100' verläuft.

Die gedachte Ebene E ist als weitere Besonderheit der siebenten Ausführungsform entgegen der Strömungsrichtung gesehen zurückgesetzt, wodurch die erläuterte Vermischung der Teilmassenströme zu den Prozessmedium-Edukt-Gemischen MRR-O beziehungsweise MRR-H noch in den Zuströmvorrichtungen 20-1, 20-2 beziehungsweise deren Passagen A1, A2 möglich ist. Die in den Passagen A1, A2 zurückgesetzte gedachte Ebene E ist als Strichlinie in die Figur 3G eingetragen.

Es wird deutlich, dass die inneren Einströmöffnungen 31i und/oder die äußeren Einströmöffnungen 31a in der siebenten Ausführungsform durch das Zurücksetzen stromauf nicht mehr so nahe der Brennkammer 40 angeordnet sind, wie mindestens eine der Einstromöffnung 31a, 31i der anderen vorhergehenden Ausführungsformen .

Optional ist es sogar möglich, dass die inneren Einströmöffnungen 31i und/oder die äußeren Einströmöffnungen 31a - durch ein noch weiteres Zurücksetzen gemäß der Ausgestaltung ii) des Brenners 100, 100' stromauf - in den einzelnen Drallgeneratoren 10-1, 10-2, 10-3 angeordnet sind.

Schließlich ist es optional auch möglich die inneren Einströmöffnungen 31i und/oder die äußeren Einströmöffnungen 31a - noch weiter stromauf Zurückzusetzen - sodass sie letztendlich gemäß der Ausgestaltung i) des Brenners 100, 100' vor den einzelnen Drallgeneratoren 10-1 angeordnet sind. Vergleiche insbesondere Figur 3D und zugehörige Beschreibung in der bereits deutlich wird, dass ein Zurücksetzen möglich ist.

Über die mehreren Passagen A1, A2, A3 ist die Ausbildung der inneren Inertisierungszone iZ₁ und der äußeren Inertisierungszone iZ₂ hinsichtlich Größe und Form sowie die bestimmte spezifische Strömungsgeometrie der Flamme F möglich, sodass insbesondere die Eindüsungspunkte 31a, 31i und auch die Brennkammerkammerwände 41, 42, 43 geschützt sind.

Insbesondere die Eindüsungspunkte 31a, 31i sind nicht mehr nahe des Flammenfußes F1 angeordnet. Das bedeutet, dass die Eindüsungspunkte 31a, 31i aus dem Bereich des hohe Temperaturen aufweisenden Flammenfußes F1 der Flamme F versetzt sind, sodass die Eindüsungspunkte 31a, 31i durch das Zurücksetzen noch geschützter angeordnet sind, im Vergleich zu den anderen Ausführungsformen. als in den anderen Ausführungsformen. Hinzu kommt der Schutz der Eindüsungspunkte 31a, 31i durch die zwischen Ausgang der Zuströmvorrichtung 20-1 und dem Eingang der Brennkammer 40 gebildeten Inertisierungsfront IF.

In Bezug auf die Beschreibung und die Darstellung der Figuren 3E bis 3G ist das Auffüllen der äußeren Rezirkulationszone/n RZ₂ zur Ausbildung der äußeren Inertisierungszone IZ₂ mit dem Inertisierungsmedium, insbesondere Wasserdampf ṁ_{Dampf} oder überkritischem Wasser ṁ_{scH2O} über einen zusätzlichen Drallgeneratoren 10-3 nur eine von anderen Möglichkeiten.

Es besteht erstens beispielsweise auch die Möglichkeit hierfür ein anderes Inertisierungsmedium zu nutzen. Es besteht zweites beispielsweise auch die Möglichkeit die Geometrie der Brennkammer 40 derart an die Geometrie der Flamme F anzupassen, sodass sich keine äußere Rezirkulationszone RZ₂ ausbildet.

Das erfindungsgemäße Verfahren und der erfindungsgemäße Brenner 100' zeichnen sich somit dadurch aus, dass die Eindüsungspunkte 31a, 31i in der mindestens einen Zuströmvorrichtung 20-1, 20-2, 20-3 des Brenners 100', insbesondere des Brenners 100' eines Wasserstoff/Sauerstoff-Dampferzeugers durch Stabilisierung der Flamme F und durch die Ausbildung einer Inertisierungsfront IF vor hohen Temperaturen geschützt sind.

Bei dem erfindungsgemäßen Brenner 100' werden die Eindüsungspunkte 31a, 31i dadurch geschützt, dass in deren Umgebung eine inerte Atmosphäre, insbesondere Wasserdampfatmosphäre herrscht.

Ein Rückschlagen der Flamme F in diese inertisierten Regionen und/oder eine Stabilisierung der Flamme F schon an den Eindüsungspunkten 31a, 31i ist dadurch ausgeschlossen. Es findet in vorteilhafter Weise eine Vermischung von Brennstoffmedium R-F und Oxidationsmedium R-O oder von Prozessmedium-Edukt-Gemischen MRR-O, MRR-H in einem vorgebbaren Abstand X1 erst stromab der Eindüsungspunkte 31a, 31i statt.

Alle Ausführungsformen:
Die exakte Ausbreitung in mindestens einer der Passagen A1, A2, A3 des über die Eindüsungsöffnungen 31; 31a, 31i eingedüsten Verbrennungseduktes R-O, R-H und/oder Prozessmedium-Edukt-Gemisches MRR-O, MRR-H in Abhängigkeit der Strömungsrichtung des über die Öffnung 11 eingedüsten Prozessmediums M hängt gemäß den Ausführungsvarianten a) und c) von verschiedenen Faktoren ab, die einzeln oder in Kombination berücksichtigt werden, wobei die Faktoren nachfolgend genannt sind:
- Richtung und Betrag des Impulses des Verbrennungseduktes R-O, R-H oder des Prozessmedium-Edukt-Gemisches MRR-O, MRR-H;
- Richtung und Betrag des Impulses des Prozessmediums M;
- Gestaltung der Geometrie, des Durchmessers, der Lage und des Eindüsungswinkels der Eindüsungsöffnungen;
- Drallzahl (entspricht dem Betrag der Drallstärke) und der Geschwindigkeit des Prozessmediums M und/oder des Verbrennungseduktes R-O, R-H und/oder Prozessmedium-Edukt-Gemisches MRR-O, MRR-H;
- radiale Ausdehnung der entsprechenden Passage/n A1, A2, A3;
- Abstand der Eindüsungsöffnungen 31 (bei Anordnung in verschiedenen Ebenen EX1, EX2) in axialer Richtung der Passagen A1, A2, A3).

Es versteht sich, dass der Brenner 100, 100' entsprechend eingerichtet ist beziehungsweise die entsprechen Mittel aufweist, um diese auch das Verfahren kennzeichnenden Faktoren beeinflussen zu können.

Bei entsprechender Einstellung der Faktoren wird vermieden, dass das Oxidationsmedium R-O oder das Prozessmedium-Edukt-Gemisch MRR-O zu den Eindüsungsöffnungen 31; 31a, 31i des Brennstoffmediums R-H oder des Prozessmedium-Edukt-Gemisches MRR-H gelangt oder das Brennstoffmedium R-H oder das Prozessmedium-Edukt-Gemisch MRR-H zu den Eindüsungsöffnungen 31; 31a, 31i des Oxidationsmediums R-O oder des Prozessmedium-Edukt-Gemisches MRR-O gelangt.

Bei der Ausführungsvariante b) ist eine Zuführung der Verbrennungsedukte R-O, R-H unter Vorvermischung mindestens eines der Verbrennungsedukte R-O, R-H mit dem Prozessmedium M zu einem Prozessmedium-Edukt-Gemisch MRR-O, MRR-H über die jeweilige mindestens eine Öffnung 31; 31a, 31i vorgesehen.

Bei dieser Ausführungsvariante b) hängt die exakte Ausbreitung in mindestens einer der Passagen A1, A2, A3, des bei einer Eindüsungsöffnung 31, 31a, 31i eingedüsten Verbrennungseduktes R-O, R-H und/oder Prozessmedium-Edukt-Gemisches MRR-O, MRR-H ebenfalls von verschiedenen Faktoren, die einzeln oder in Kombination berücksichtigt werden, wobei die Faktoren die nachfolgend genannt sind:
- Richtung und Betrag des Impulses des Verbrennungseduktes R-O, R-H oder des Prozessmedium-Edukt-Gemisches MRR-O, MRR-H;
- Gestaltung der Geometrie, des Durchmessers, der Lage und des Winkels der Eindüsungsöffnungen;
- Drallzahl (entspricht dem Betrag der Drallstärke) und der Geschwindigkeit des Verbrennungseduktes R-O, R-H und/oder Prozessmedium-Edukt-Gemisches MRR-O, MRR-H;
- radiale Ausdehnung der entsprechenden Passage/n A1, A2, A3;
- Abstand der Eindüsungsöffnungen 31 bei Anordnung in verschiedenen Ebenen EX1, EX2) in axialer Richtung der Passagen A1, A2, A3.

Bei der Ausführungsvariante b) hängt die Ausbreitung nicht von der Richtung und dem Betrag des Impulses des Prozessmediums M ab, weil in dem Ausführungsbeispiel b) kein Prozessmedium M über die Eindüsungsöffnung 11 eingedüst wird.

Es versteht sich, dass auch bei dieser zweiten Ausführungsvariante b), der Brenner 100, 100' entsprechend eingerichtet ist beziehungsweise die entsprechen Mittel aufweist, um diese auch das Verfahren kennzeichnenden Faktoren beeinflussen zu können.

Bei entsprechender Einstellung der Faktoren wird auch hier vermieden, dass das Oxidationsmedium R-O oder das Prozessmedium-Edukt-Gemisch MRR-O zu den Eindüsungsöffnungen 31; 31a, 31i des Brennstoffmediums R-H oder des Prozessmedium-Edukt-Gemisches MRR-H gelangt oder das Brennstoffmedium R-H oder das Prozessmedium-Edukt-Gemisch MRR-H zu den Eindüsungsöffnungen 31; 31a, 31i des Oxidationsmediums R-O oder des Prozessmedium-Edukt-Gemisches MRR-O gelangt.

In einem bevorzugten Beispiel der Auswahl der genannten Faktoren ist bei sich auf einer Ebene E befindenden radial gegenüberliegenden Anordnung von Eindüsungsöffnungen 31; 31a, 31i (vergleiche Figuren 3A, 3C, 3E, 3F und 3G und zugehörige Beschreibungen) zur Eindüsung von Oxidationsmedium R-O und Brennstoffmedium R-H oder Prozessmedium-Edukt-Gemische MRR-O, MRR-H beispielsweise innerhalb einer Passage A1 vorgesehen, dass der Impuls des über die Eindüsungsöffnung 11 eingedüsten Prozessmediums M (gemäß der Ausführungsvariante a) und c)) in Abhängigkeit zur Einströmrichtung der Verbrennungsedukte R-O, R-H und im Verhältnis zu den Impulsen der Verbrennungsedukte R-O, R-H beziehungsweise Prozessmedium-Edukt-Gemische MRR-O, MRR-H groß ist, sodass eine Eindringtiefe der Verbrennungsedukte R-O, R-H beziehungsweise Prozessmedium-Edukt-Gemische MRR-O, MRR-H innerhalb der Ebene E der Eindüsungsöffnungen 31, 31a, 31i klein ist, wodurch sicher gestellt ist, dass sich die Inertisierungsfront IF ausbildet und sich die beiden Verbrennungsedukte R-H, R-O erst stromab dieser Inertisierungsfront IF miteinander mischen.

Mit anderen Worten der Impuls des über die Eindüsungsöffnung 11 eingedüsten Prozessmediums M ist groß und die Impulse der über die Eindüsungsöffnungen 31; 31a, 31i eingedüsten Verbrennungsedukte R-H, R-O ist klein beziehungsweise so klein, dass der Impuls des über die Eindüsungsöffnung 11 eingedüsten Prozessmediums M eine Vermischung der Verbrennungsedukte R-O, R-H beziehungsweise Prozessmedium-Edukt-Gemische MRR-O, MRR-H an den Eindüsungsöffnungen 31; 31a, 31i sicher verhindert.

Diese Vorgehensweise kann auch für die sich nicht in einer Ebene E-X1, E-X1 befindenden gegenüberliegende Anordnung von Eindüsungsöffnungen 31; 31a, 31i (vergleiche Figuren 3B und 3D und zugehörige Beschreibungen) zur Eindüsung von Oxidationsmedium R-O und Brennstoffmedium R-H beziehungsweise Prozessmedium-Edukt-Gemische MRR-O, MRR-H innerhalb einer Passage A1 gewählt werden.

In einem anderen bevorzugten Beispiel der Auswahl der genannten Faktoren ist eine gegenüber der Längsmittelachse X des Brenners 100, 100' nicht orthogonale Eindüsung der Verbrennungsedukte R-O, R-H beziehungsweise Prozessmedium-Edukt-Gemische MRR-O, MRR-H vorgesehen. Beispielsweise wird gegenüber der Strömungsrichtung des Prozessmediums M (Ausführungsvariante a) und c)) oder gegenüber der Längsmittelachse X des Brenners 100, 100' (Ausführungsvariante b)) jeweils ein Eindüsungswinkel von 45° mit stromab weisenden Eindüsungsöffnungen 31; 31a, 31i gewählt, wodurch ebenfalls die Eindringtiefe der Verbrennungsedukte R-O, R-H beziehungsweise Prozessmedium-Edukt-Gemische MRR-O, MRR-H innerhalb der Ebene E (vergleiche Figuren 3A, 3C, 3E, 3F und 3G und zugehörige Beschreibungen) oder den verschiedenen Ebenen E-X1, E-X2 (vergleiche Figuren 3B, 3D und zugehörige Beschreibungen) der Eindüsungsöffnungen 31; 31a, 31i verkleinert wird und sich die gewünschte Inertisierungsfront IF ausbildet, sodass sich die Verbrennungsedukte R-O, R-H beziehungsweise Prozessmedium-Edukt-Gemische MRR-O, MRR-H erst stromab dieser Inertisierungsfront IF miteinander mischen.

Der große Vorteil der erfindungsgemäßen Vorgehensweise gegenüber bestehenden Dampferzeugern deren Brennkammern mit Raketenbrennern betrieben werden, besteht in der guten Reinheit des erzeugten Dampfes, der guten durch den Drall erzeugten Durchmischung der Verbrennungsedukte und einem dadurch bewirkten optimalen Ausbrand der Verbrennungsedukte, sowie durch die Erzeugung der Inertisierungsfront IF einer längeren Lebensdauer des Brenners 100, 100' beziehungsweise in einem geringeren Instandhaltungsaufwand. Der erzeugte Dampf als beispielhaftes Verbrennungsendprodukt P kann direkt in einem Dampf-oder Gastturbinenprozess zur Stromerzeugung genutzt werden. Das Verfahren ist in kleineren Anlagen mit Leistungen von einigen kW [Kilowatt] oder weniger bis hin zum industriellen Maßstab mit Leistungen mehrerer 100 MW [Megawatt] anwendbar.

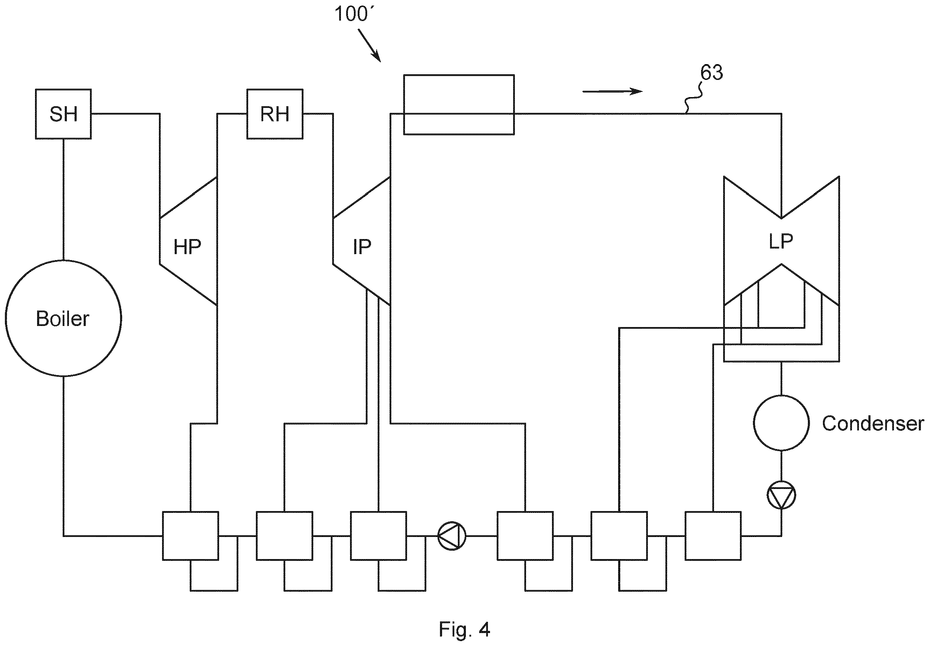

Die Figur 4 zeigt in einem erfindungsgemäßen Anwendungsfall beispielhaft eine möglich Anordnung eines erfindungsgemäßen Brenners 100' und des zugehörigen erfindungsgemäßen Verfahrens am Beispiel eines Dampfturbinenprozesses. Schematisch abgebildet ist eine Dampfturbine mit einer Hochdruckstufe HP einer Mitteldruckstufe IP und einer Niederdruckstufe LP.

Es besteht erfindungsgemäß beispielsweise die Möglichkeit gemäß dem Pfeil Wasserdampf *ṁ*_{Dampf} aus der Mitteldruckstufe MP zu überhitzen bevor er als überhitzter Wasserdampf *ṁ*_{ÜDampf} in die Niederdruckstufe LP der Dampfturbine eintritt.

Der erfindungsgemäße Brenner 100' ist in der Turbinenleitung 63 zwischen Mitteldruckstufe MP und Niederdruckstufe LP eigebunden und stellt den Überhitzer des Dampfes dar. Es versteht sich, dass dieses Beispiel nur ein Beispiel von sehr vielen möglichen Anwendungsfällen ist, wie nachfolgend noch ausgeführt wird.

In Figur 5 ist in einer Tabelle zusammengefasst, die keinen Anspruch auf Vollständigkeit erhebt, welche Prozessmedien M, Verbrennungsedukte R und Verbrennungsprodukte in verschiedenen Anwendungsfällen P zum Einsatz kommen können.

Jeder Zeile ist eine Ordinalzahl 1 bis 9 zugeordnet. Jeder Ordinalzahl 1 bis 9 sind von links nach rechts in den Spalten gelesen diejenigen Medien angegeben, die in dem erfindungsgemäßen Brenner 100', der eingerichtet ist um das erfindungsgemäße Verfahren durchzuführen, verwendet werden können.

Die jeweilige Ordinalzahl befindet sich in Spalte 1. In Spalte 2 ist je Zeile ein Prozessmedium M eingetragen, welches erfindungsgemäß gleichzeitig als Inertisierungsmedium eingesetzt wird. In Spalte 3 ist das erste Verbrennungsedukt R-F und in Spalte 4 das zweite Verbrennungsedukte R-O angegeben. Spalte 5 beinhaltet die Angabe des Verbrennungsproduktes

Zwei Beispiele. Erstes Beispiel Nr. 8: Es kann als Prozessmedium M Helium He, als Verbrennungsedukte Wasserstoff H₂ und Sauerstoff O₂ zum Einsatz kommen, wobei das Verbrennungsprodukt P ein Gemisch aus Wasserdampf und Helium ist.

Zweites Beispiel Nr. 9: Es kann als Prozessmedium M Wasser H₂0, als erstes Verbrennungsedukt R-H Ammoniak NH₃ als zweites Verbrennungsedukt R-O Sauerstoff O₂ zum Einsatz kommen, wobei das Verbrennungsprodukt P ein Gemisch aus Stickstoff N2 und Wasser H₂0 ist.

In allen Zeilen kann, wenn nicht bereits speziell angegeben das Prozess-/ Inertisierungsmedium sowohl als gasförmiges Medium, überkritisches Medium oder als flüssiges Medium genutzt werden.

Außerdem besteht jeweils die Möglichkeit, dass die Verbrennungsedukte R-H , R-O mit dem jeweiligen Prozessmediums M zu Prozessmedium-Edukt-Gemischen MRR-H, MRR-O vorgemischt werden, bevor sie in die mindestens eine Zuströmvorrichtung 20-1 eingedüst werden, oder dass die Verbrennungsedukte R-H, R-O in der mindestens einen Zuströmvorrichtung 20-1 mit dem Prozessmediums M zu Prozessmedium-Edukt-Gemischen MRR-H, MRR-O gemischt werden.

Den jeweiligen Medien werden anhand der Ordinalzahlen nachfolgend mögliche erfindungsgemäße Anwendungsfälle zugeordnet.

Die Medien in den Zeilen mit den Ordinalzahlen 1 - 5 können im Gas- und Dampfturbinenprozess, im reinen Dampfturbinenprozess, in Raffinerien und in Vakuumanlagen zum Einsatz kommen. Bei diesen Prozessen werden jeweils sehr große Dampfmengen benötigt, die durch das erfindungsgemäße Verfahren mit dem erfindungsgemäßen Brenner 100' hergestellt werden können.

Die Medien in den Zeilen mit den Ordinalzahlen 6 und 7 können in überkritischen Kreisprozessen auf CO₂-Basis zur Stromspeicherung beziehungsweise Stromproduktion eingesetzt werden. Solche Kreisprozesse sind Gegenstand der aktuellen Forschung. Der beschriebene Brenner 100' und das zugehörige Verfahren könnte bei solchen Kreisprozessen mit den genannten Medien für eine Zwischenüberhitzung des Kohlendioxids CO₂ genutzt werden.

Die Medien in der Zeile 8 können in einem Stirling-Prozess bei der Stromproduktion beispielsweise in Solarkraftwerken genutzt werden. Das Prozessmedium ist dann wie oben erwähnt Helium He, wobei eine teilweise oder vollständige Auskondensierung von Wasser möglich ist.

Die Medien in den Zeilen mit den Ordinalzahlen 9 und 10 werden in Kalina-Kreisprozessen und in Kreisprozessen mit Ammoniak-Wasser-Gemischen eingesetzt.

Generell kann das erfindungsgemäße Verfahren in Anwendungsfällen zum Einsatz kommen, wenn ein Prozessmedium zur Verfügung steht, welches gleichzeitig als Inertisierungsmedium eingesetzt wird. Dabei ist vorgesehen, dass das Prozessbeziehungsweise Inertisierungsmedium Teil eines Kreisprozesses ist und als Eingangsmedium zur Verfügung gestellt wird oder es entsteht in dem jeweiligen Kreisprozess. Beispielsweise entsteht das Prozess- und Inertisierungsmedium erst bei der Verbrennung der Verbrennungsedukte. Es ist ferner vorgesehen, dass die Verbrennungsedukte hochreaktive Medien sein können. Zudem ist es das Ziel beziehungsweise mit dem erfindungsgemäßen Verfahren möglich ein sehr reines Verbrennungsprodukt zu erzeugen.

### Bezugszeichenliste

- 100: Brenner (Stand der Technik)
- 100': Brenner (Erfindung)
- 10-1: erste Drallvorrichtung
- 10-2: zweite Drallvorrichtung
- 10-3: dritte Drallvorrichtung
- 11: Prozessmedium-Zuführungsöffnung (Prozessmedium M)
- 20-1: erste Zuströmvorrichtung
- 20-2: weitere Zuströmvorrichtung
- 20-3: weitere Zuströmvorrichtung
- 21: Zuströmvorrichtungslängswand
- A1: erste Passage
- A2: zweite Passage
- A3: dritte Passage
- 30: Eindüsungsvorrichtung
- 31: Edukt-Eindüsungsöffnung
- 31a: Edukt-Eindüsungsöffnung (wandseitig)
- 31i: Edukt-Eindüsungsöffnung (lanzenseitig)
- 40: Brennkammer
- 41: Brennkammerwand
- 42: Brennkammerstirnwand
- 43: Brennkammerlängswand
- 44: Brennkammer-Zuführleitung
- 60: Bypass-Rückführleitung
- 61: Bypass Fördereinrichtung
- 62: Bypass-Zuführleitung
- 63: Turbinenleitung
- X: Längsmittelachse oder Drallachse des Brenners
- X1: Abstand
- Z: Rezirkulationszone
- RZ₁: innere Rezirkulationszone
- RZ₂: äußere Rezirkulationszone
- F: Flamme
- F1: Flammenfuß
- S: Scherschicht
- IF: Inertisierungsfront
- IZ: Inertisierungszone
- IZ₁: innere Inertisierungszone
- IZ₂: äußere Inertisierungszone
- E: radiale Ebene einer Edukt-Eindüsungsöffnung
- E-X1: radiale Ebene einer Edukt-Eindüsungsöffnung
- E-X2: radiale Ebene einer Edukt-Eindüsungsöffnung
- EF: radiale Ebene des Flammenfußes F1

- M: Prozessmedien:

- ṁ_{Dampf}: Wasserdampf-Teilmassenstrom
- *ṁ*_{scH2O}: Wasser (überkritisch)-Teilmassenstrom
- ṁ_{zDampf}: Wasserdampf über mindestens eine weitere Passage
- *ṁ*_{zscH2O}: überkritisches Wasser über mindestens eine weitere Passage

- R: Verbrennungsedukte:
- R-F: Brennstoffmedium
- R-O: Oxidationsmedium
- H₂: Verbrennungsedukt (Brennstoffmedium R-F)
- O₂: Verbrennungsedukt (Oxidationsmedium R-O)
- *ṁ*_{H2}: Wasserstoff-Teilmassenstrom
- *ṁ*_{O2}: Sauerstoff-Teilmassenstrom

- MR: Gemische aus Prozessmedium M und eines Verbrennungseduktes:

- MRR-F: Prozessmedium-Edukt-Gemisch aus Brennstoffmedium R-F und Prozessmedium M

- MRR-O: Prozessmedium-Edukt-Gemisch aus Oxidationsmedium R-O und Prozessmedium M
- *ṁ*_{Dampf}/H₂: Wasserdampf/Wasserstoff-Gemisch (MRR-F)
- *ṁ*_{Dampf}/O₂: Wasserdampf/Sauerstoff-Gemisch (MRR-O)

- P: Verbrennungsprodukte:
- ṁ_{ÜDampf}: überhitzter Wasserdampf-Massenstrom
- *ṁ*_{ÜscH2O}: überhitzter Wasser (überkritisch)-Massenstrom

## Patentansprüche

1. Brenner (100, 100') zur Herstellung eines Verbrennungsproduktes (P) eingerichtet, um einer dem Brenner (100, 100') in Strömungsrichtung nachgeschalteten Brennkammer (40) mindestens zwei Verbrennungsedukte (R; R-F; R-O), mindestens ein Verbrennungsedukt (R) als Brennstoffmedium (R-F) und mindestens ein Verbrennungsedukt (R) als Oxidationsmedium (R-O) und mindestens ein inertisierende Eigenschaften aufweisendes Prozessmedium (M) insgesamt verdrallt zuzuführen, sodass sich in der Brennkammer (40) eine drallstabilisierte Flamme (F) bildet, wobei der Brenner (100, 100') zur Stabilisierung der Flamme (F) mindestens eine Drallvorrichtung (10) aufweist, wobei der Brenner (100, 100') in mindestens einer Zuströmvorrichtung (20-1; 20-2; 20-3) über Öffnungen (11, 31) verfügt, über die Teilmassenströme jeweils getrennt voneinander in die Brennkammer wie folgt zuführbar sind,
• getrennte Zuführung der Verbrennungsedukte (R-F; R-O) über Edukt-Eindüsungsöffnungen (31a, 31i) und getrennte Zuführung des inertisierenden Prozessmediums (M) über mindestens eine Öffnung (11) oder
• getrennte Zuführung der Verbrennungsedukte (R-F; R-O) unter Vorvermischung mindestens eines der Verbrennungsedukte (R-F, R-O) mit dem inertisierenden Prozessmedium (M) zu einem Prozessmedium-Edukt-Gemisch (MR; MRR-F; MRR-O) über Edukt-Eindüsungsöffnungen (31a, 31i) und getrennte Zuführung des inertisierenden Prozessmediums (M) über die mindestens eine Öffnung (11),
wobei die mindestens eine Zuströmvorrichtung (20-1; 20-2; 20-3) mindestens eine Passage (A1, A2, A3) aufweist, in der die getrennt voneinander angeordneten Edukt-Eindüsungsöffnungen (31a; 31i) zur getrennten Zuführung der Verbrennungsedukte (R-F; R-O) oder der Prozessmedium-Edukt-Gemische (MR; MRR-F; MRR-O) angeordnet sind,
wobei die mindestens eine Zuströmvorrichtung (20-1; 20-2; 20-3) über die mindestens eine Prozessmedium-Zuführungsöffnung (11) zur getrennten Zuführung des inertisierenden Prozessmediums (M) verfügt, wobei mindestens eine der Edukt-Eindüsungsöffnungen (31a, 31i) mindestens eines Verbrennungseduktes (R-F; R-O) stromab des Brenners (100, 100') gesehen am Ausgang der mindestens einen Zuströmvorrichtung (20-1; 20-2; 20-3) der Brennkammer (40) angeordnet ist, wobei sich das inertisierende Prozessmedium (M) in der mindestens einen Passage (A1, A2, A3) ausbreitet und bis zu den Edukt-Eindüsungsöffnungen (31a; 31i) gelangt, sodass die Teilmassenströme der Verbrennungsedukte (R; R-F, R-O) und/oder Prozessmedium-Edukt-Gemische (MR; MRR-F; MRR-O) unter Ausbildung der drallstabilisierten Flamme (F) von den Eindüsungsöffnungen (31a; 31i) verdrängt werden und erst hinter einer Inertisierungsfront (IF) zusammen treffen, die an den Eindüsungsöffnungen (31a; 31i) durch das gleichzeitige Vorhandensein des inertisierenden Prozessmediums (M) gebildet wird, wobei sich die Inertisierungsfront (IF) zwischen der am weitesten stromab liegenden Edukt-Eindüsungsöffnung (31a; 31i) eines der Verbrennungsedukte (R; R-F, R-O) oder eines der Prozessmedium-Edukt-Gemische (MR; MRR-F; MRR-O) und jeweils der erst in einem Flammenfuß (F1) der Flamme (F) in der Brennkammer (40) zusammen kommenden Verbrennungsedukte (R; R-F, R-O) und/oder Prozessmedium-Edukt-Gemische (MR; MRR-F; MRR-O) ausbildet.

2. Brenner (100, 100') nach Anspruch 1, **dadurch gekennzeichnet, dass** die mindestens eine Zuströmvorrichtung (20-1, 20-2, 20-3) i) vor der Drallvorrichtung (10) oder ii) in die Drallvorrichtung (10) integriert oder iii) hinter der Drallvorrichtung (10) angeordnet ist.

3. Brenner (100, 100') nach Anspruch 1, **dadurch gekennzeichnet, dass** die Edukt-Eindüsungsöffnungen (31a, 31i) der Verbrennungsedukte (R; R-F und R-O) oder der Prozessmedium-Edukt-Gemische (MR; MRR-F; MRR-O) radial zur axialen Längsmittelachse (X) des Brenners (100, 100') gesehen in einer Ebene (E) oder in unterschiedlichen Ebenen (E-X1, E-X2) angeordnet sind.

4. Brenner (100, 100') nach Anspruch 1, **dadurch gekennzeichnet, dass** die mindestens eine Zuströmvorrichtung (20-1, 20-2, 20-3) eine erste Passage (A1) oder eine erste Passage (A1) und mindestens eine weitere Passage (A2, A3) aufweist.

5. Brenner (100, 100') nach Anspruch 4, **dadurch gekennzeichnet, dass** der mindestens einen Passage (A1, A2, A3) eine Drallvorrichtung (10-1, 10-2, 10-3) zugeordnet ist, oder mehreren Passagen (A1, A2, A3) eine gemeinsame Drallvorrichtung oder jeweils eine separate Drallvorrichtung (10-1, 10-2, 10-3) zugeordnet ist/sind.

6. Brenner (100, 100') nach Anspruch 5, **dadurch gekennzeichnet, dass** die jeweilige Drallrichtung und/oder Drallzahl des mindestens einen Teilmassenstroms in der mindestens einen Passage (A1) oder der Teilmassenströme in den mehreren Passagen (A1, A2, A3) durch mindestens eine Drallvorrichtung (10-1) oder mehrere Drallvorrichtungen (10-1, 10-2, 10-3) vorgebbar ist, wobei bei einer Anordnung mehrerer Passagen (A1, A2, A3) gleichgerichtete oder gegenläufige Drallrichtungen der Teilmassenströme mit gleichen oder unterschiedlichen Drallzahlen vorgebbar sind.

7. Verfahren zur Herstellung eines Verbrennungsproduktes (P) bei dem einem Brenner (100, 100') nach mindestens einem der Ansprüche 1 bis 6 einer in Strömungsrichtung nachgeschalteten Brennkammer (40) mindestens zwei Verbrennungsedukte (R; R-F; R-O), mindestens ein Verbrennungsedukt (R) als Brennstoffmedium (R-F) und mindestens ein Verbrennungsedukt (R) als Oxidationsmedium (R-O) und mindestens ein inertisierende Eigenschaften aufweisendes Prozessmedium (M) insgesamt verdrallt zugeführt werden, sodass in der Brennkammer (40) eine drallstabilisierte Flamme (F) gebildet wird, wobei der Brenner (100, 100') zur Stabilisierung der Flamme (F) mindestens eine Drallvorrichtung (10) aufweist, wobei dem Brenner (100, 100') über Öffnungen (11, 31) in mindestens einer Zuströmvorrichtung (20-1, 20-2, 20-3) Teilmassenströme jeweils getrennt wie folgt zugeführt werden,
• getrennte Zuführung der Verbrennungsedukte (R-F; R-O) über Edukt-Eindüsungsöffnungen (31a, 31i)und getrennte Zuführung des inertisierenden Prozessmediums (M) über mindestens eine Öffnung (11) oder
• getrennte Zuführung der Verbrennungsedukte (R-F; R-O) unter Vorvermischung mindestens eines der Verbrennungsedukte (R-F, R-O) mit dem inertisierenden Prozessmedium (M) zu einem Prozessmedium-Edukt-Gemisch (MR; MRR-F; MRR-O) über Edukt-Eindüsungsöffnungen (31a, 31i)und getrennte Zuführung des inertisierenden Prozessmediums (M) über die mindestens eine Öffnung (11),
wobei die mindestens eine Zuströmvorrichtung (20-1; 20-2; 20-3) mindestens eine Passage (A1, A2, A3) aufweist, in der die getrennt voneinander angeordneten Edukt-Eindüsungsöffnungen (31a; 31i) zur Zuführung der Verbrennungsedukte (R-F; R-O) oder der Prozessmedium-Edukt-Gemisch (MR; MRR-F; MRR-O) angeordnet sind,
wobei die mindestens eine Zuströmvorrichtung (20-1; 20-2; 20-3) über die mindestens eine Prozessmedium-Zuführungsöffnung (11) zur getrennten Zuführung des inertisierenden Prozessmediums (M) verfügt, wobei mindestens eine der Edukt-Eindüsungsöffnungen (31a, 31i) mindestens eines Verbrennungseduktes (R-F; R-O) stromab des Brenners (100, 100') gesehen am Ausgang der mindestens einen Zuströmvorrichtung (20-1; 20-2; 20-3) der Brennkammer (40) angeordnet ist, wobei sich das inertisierende Prozessmedium (M) in der mindestens einen Passage (A1, A2, A3) ausbreitet und bis zu den Edukt-Eindüsungsöffnungen (31a; 31i) gelangt,
so dass die Teilmassenströme der Verbrennungsedukte (R; R-F, R-O) und/oder Prozessmedium-Edukt-Gemische (MR; MRR-F; MRR-O) unter Ausbildung der drallstabilisierten Flamme (F) von den Eindüsungsöffnungen (31a, 31i) verdrängt werden und erst hinter einer Inertisierungsfront (IF) zusammen treffen, die an den Eindüsungsöffnungen (31a, 31i) durch das gleichzeitige Vorhandensein des inertisierenden Prozessmediums (M) gebildet wird, wobei die Inertisierungsfront (IF) zwischen der am weitesten stromab liegenden Eindüsungsöffnung (31a, 31i) eines der Verbrennungsedukte (R; R-F, R-O) oder eines der Prozessmedium-Edukt-Gemische (MR; MRR-F; MRR-O) und jeweils der erst in einem Flammenfuß (F1) der Flamme (F) in der Brennkammer (40) zusammen kommenden Verbrennungsedukte (R; R-F, R-O) und/oder Prozessmedium-Edukt-Gemische (MR; MRR-F; MRR-O) ausgebildet wird.

8. Verfahren nach Anspruch 7, **dadurch gekennzeichnet, dass** mindestens eines der Verbrennungsedukte (R; R-F; R-O) und das inertisierende Prozessmedium (M)
• vor einer Zuführung über die Edukt-Eindüsungsöffnungen (31a, 31i) in die mindestens eine Zuströmvorrichtung (20-1, 20-2, 20-3) des Brenners (100, 100') zu einem Prozessmedium-Edukt-Gemisch (MR; MRR-F; MRR-O) vorgemischt oder
• nach einer Zuführung über die Edukt-Eindüsungsöffnungen (31a, 31i) in die Zuströmvorrichtung (20-1, 20-2, 20-3) des Brenners (100, 100') noch in der Zuströmvorrichtung (20-1, 20-2, 20-3) und vor ihrem Aufeinandertreffen zu einem Prozessmedium-Edukt-Gemisch (MR; MRR-F; MRR-O) gemischt wird.

9. Verfahren nach Anspruch 7, **dadurch gekennzeichnet, dass** bei ausschließlicher Ausbildung einer ersten Passage (A1) eine Inertisierungsfront (IF) mit einer inneren Inertisierungszone (IZ₁)
• zwischen der am weitesten stromab liegenden Öffnung (31) eines der Verbrennungsedukte (R; R-F oder R-O) und/oder eines der Prozessmedium-Edukt-Gemische (MR; MRR-F; MRR-O) oder
• zwischen den am weitesten stromab liegenden Edukt-Eindüsungsöffnungen (31a, 31i) der Verbrennungsedukte (R; R-F, R-O) und/oder der Prozessmedium-Edukt-Gemische (MR; MRR-F; MRR-O)
und jeweils der in einem Flammenfuß (F1) der Flamme (F) zusammen kommenden Verbrennungsedukte (R; R-F, R-O) und/oder Prozessmedium-Edukt-Gemische (MR; MRR-F; MRR-O) ausgebildet wird.

10. Verfahren nach Anspruch 7, **dadurch gekennzeichnet, dass** bei Ausbildung einer ersten Passage (A1) und mindestens einer weiteren Passage (A2, A3) eine Inertisierungsfront (IF) mit einer inneren Inertisierungszone (IZ₁) und einer äußeren Inertisierungszone (IZ₂)
• zwischen der am weitesten stromab liegenden Öffnung (31) eines der Verbrennungsedukte (R; R-F, R-O) und/oder eines der Prozessmedium-Edukt-Gemische (MR; MRR-F; MRR-O) oder
• zwischen den am weitesten stromab liegenden Edukt-Eindüsungsöffnungen (31a, 31i) der Verbrennungsedukte (R; R-F und R-O) und/oder der Prozessmedium-Edukt-Gemische (MR);MRR-F, MRR-O)
und jeweils der in einem Flammenfuß (F1) der Flamme (F) zusammen kommenden Verbrennungsedukte (R; R-F, R-O) und/oder Prozessmedium-Edukt-Gemische (MR; MRR-F, MRR-O) ausgebildet wird.

11. Verfahren nach Anspruch 7, **dadurch gekennzeichnet, dass** der mindestens einen Passage (A1, A2, A3) eine Drallvorrichtung (10-1, 10-2, 10-3) zugeordnet wird, oder mehreren Passagen (A1, A2, A3) gemeinsame Drallvorrichtungen oder jeweils eine separate Drallvorrichtung (10-1, 10-2, 10-3) zugeordnet werden/wird, wodurch die jeweilige Drallrichtung und die jeweilige Drallzahl der Teilmassenströme in der mindestens einen Passage (A1) oder in den mehreren Passagen (A1, A2, A3) vorgebbar ist, wobei bei einer Anordnung mehrerer Passagen (A1, A2, A3) gleichgerichtete oder gegenläufige Drallrichtungen der Teilmassenströme mit gleichen oder unterschiedlichen Drallzahlen vorgebbar sind.

12. Verfahren nach Anspruch 7, **dadurch gekennzeichnet, dass** ein Teilmassenstrom des Verbrennungsproduktes (P) aus der Brennkammer (40) oder hinter der Brennkammer (40) bypassartig abgezweigt und durch Zugabe eines Kühlmediums über eine Bypass-Zuführleitung (62) einer Bypass-Rückführleitung (60) herunter gekühlt und anschließend wieder in den Brenner (100, 100') gefördert wird.

13. Verfahren nach Anspruch 7, **dadurch gekennzeichnet, dass** der Gesamtmassenstrom des Verbrennungsendproduktes (P) bereits in der Brennkammer (40) durch Zugabe eines Mediums, insbesondere des jeweiligen inertisierenden Prozessmediums (M) über eine Zuführleitung (44) thermisch beeinflusst wird, insbesondere gekühlt wird, wodurch sich der Gesamtmassenstrom um den Teilmassenstrom des zugeführten Mediums erhöht.

## Claims

1. A burner (100, 100') designed for making a combustion product (P) in order to supply, in a swirling manner, at least two combustion educts (R; R-F; R-O), at least one combustion educt (R) as a fuel medium (R-F) and at least one combustion educt (R) as an oxidation medium (R-O) and at least one process medium (M) comprising inerting properties in total to a combustion chamber (40) arranged downstream of the burner (100, 100') in the flow direction,
such that a swirl-stabilized flame (F) is formed in the combustion chamber, wherein the burner (100, 100') comprises at least one swirl generator (10) to stabilize the flame (F), wherein the burner (100, 100') has openings (11, 31) in at least one inlet device (20-1; 20-2; 20-3), via which partial mass flows can in each case be supplied separately from each other to the combustion chamber as follows:
separate supply of the combustion educts (R-F; R-O) via educt injection openings (31a, 31i) and separate supply of the inerting process medium (M) via at least one opening (11), or
separate supply of the combustion educts (R-F; R-O) via educt injection openings (31a, 31i), by pre-mixing at least one of the combustion educts (R-F, R-O) with the inerting process medium (M) to form a process medium-educt mixture (MR; MRR-F; MRR-O), and separate supply of the inerting process medium (M) via the at least one opening (11),
wherein the at least one inlet device (20-1; 20-2; 20-3) comprises at least one passage (A1, A2, A3), in which the educt injection openings (31a; 31i) arranged separately from one another are arranged for separately supplying the combustion educts (R-F; R-O) or the process medium-educt mixtures (MR; MRR-F; MRR-O),
wherein the at least one inlet device (20-1; 20-2; 20-3) has the at least one process medium supply opening (11) for separately supplying the inerting process medium (M), wherein at least one of the educt injection openings (31a, 31i) of at least one combustion educt (R-F; R-O), viewed downstream of the burner (100, 100'), is arranged at the exit of the at least one inlet device (20-1; 20-2; 20-3) of the combustion chamber (40), wherein the inerting process medium (M) propagates in the at least one passage (A1, A2, A3) and reaches the educt injection openings (31a; 31i) such that the partial mass flows of the combustion educts (R; R-F, R-O) and/or the process medium-educt mixtures (MR; MRR-F; MRR-O) are displaced by the injection openings (31a; 31i) and converge while forming the swirl-stabilized flame (F) only behind an inertization front (IF) which is formed at the injection openings (31a; 31i) through the simultaneous presence of the inerting process medium (M), wherein the inertization front (IF) is formed between the most downstream educt injection opening (31a; 31i) of one of the combustion educts (R; R-F, R-O) or one of the process medium-educt mixtures (MR; MRR-F; MRR-O) and the respective combustion educts (R; R-F, R-O) and/or process medium-educt mixtures (MR; MRR-F; MRR-O) converging first in a flame foot (F1) of the flame (F) in the combustion chamber (40).

2. The burner (100, 100') according to Claim 1, **characterized in that** the at least one inlet device (20-1, 20-2, 20-3) is i) in front of the swirl generator (10) or ii) integrated into the swirl generator (10) or iii) arranged behind the swirl generator (10).

3. The burner (100, 100') according to Claim 1, **characterized in that** the educt injection openings (31a, 31i) of the combustion educts (R; R-F and R-O) or of the process medium-educt mixtures (MR; MRR-F; MRR-O) are arranged in one plane (E) or in different planes (E-X1, E-X2) when viewed radially to the axial longitudinal central axis (X) of the burner (100, 100').

4. The burner (100, 100') according to Claim 1, **characterized in that** the at least one inlet device (20-1, 20-2, 20-3) comprises a first passage (A1) or a first passage (A1) and at least one further passage (A2, A3).

5. The burner (100, 100') according to Claim 4, **characterized in that** one swirl generator (10-1, 10-2, 10-3) is assigned to the at least one passage (A1, A2, A3), or a joint swirl generator or, respectively, a separate swirl generator (10-1, 10-2, 10-3) is assigned to a plurality of passages (A1, A2, A3).

6. The burner (100, 100') according to Claim 5, **characterized in that** the respective swirl direction and/or swirl number of the at least one partial mass flow in the at least one passage (A1) or of the partial mass flows in the plurality of passages (A1, A2, A3) can be predefined by at least one swirl generator (10-1) or multiple swirl generators (10-1, 10-2, 10-3), wherein if a plurality of passages (A1, A2, A3) are arranged, swirl directions in the same or opposite direction of the partial mass flows having the same or different swirl numbers can be predefined.

7. A method for making a combustion product (P), in which at least two combustion educts (R; R-F; R-O), at least one combustion educt (R) as a fuel medium (R-F) and at least one combustion educt (R) as an oxidation medium (R-O), and at least one process medium (M) comprising inerting properties are supplied in total, in a swirled manner, to a combustion chamber (40) downstream of a burner (100, 100') according to at least one of Claims 1 to 6 in the flow direction, such that a swirl-stabilized flame (F) is formed in the combustion chamber (40), wherein the burner (100, 100') comprises at least one swirl generator (10) to stabilize the flame (F), wherein partial mass flows are, in each case, supplied separately to the burner (100, 100') via openings (11, 31) in at least one inlet device (20-1, 20-2, 20-3) as follows:
separate supply of the combustion educts (R-F; R-O) via educt injection openings (31a, 31i) and separate supply of the inerting process medium (M) via at least one opening (11), or
separate supply of the combustion educts (R-F; R-O) via educt injection openings (31a, 31i) by pre-mixing at least one of the combustion educts (R-F, R-O) with the inerting process medium (M) to form a process medium-educt mixture (MR; MRR-F; MRR-O) and separate supply of the inerting process medium (M) via the at least one opening (11),
wherein the at least one inlet device (20-1; 20-2; 20-3) comprises at least one passage (A1, A2, A3), in which the educt injection openings (31a; 31i) arranged separately from one another are arranged to supply the combustion educts (R-F; R-O) or the process medium educt mixture (MR; MRR-F; MRR-O),
wherein the at least one inlet device (20-1; 20-2; 20-3) has the at least one process medium supply opening (11) for separately supplying the inerting process medium (M), wherein at least one of the educt injection openings (31a, 31i) of at least one combustion educt (R-F; R-O) is arranged, viewed downstream of the burner (100, 100'), at the exit of the at least one inlet device (20-1; 20-2; 20-3) of the combustion chamber (40), wherein the inerting process medium (M) propagates in the at least one passage (A1, A2, A3) and reaches the educt injection openings (31a; 31i),
such that the partial mass flows of the combustion educts (R; R-F, R-O) and/or process medium educt mixtures (MR; MRR-F; MRR-O) are displaced by the injection openings (31a, 31i) and converge while forming the swirl-stabilized flame (F) only behind an inertization front (IF) which is formed at the injection openings (31a, 31i) through the simultaneous presence of the inerting process medium (M), wherein the inertization front (IF) is formed between the most downstream injection opening (31a, 31i) of one of the combustion educts (R; R-F, R-O) or one of the process medium-educt mixtures (MR; MRR-F; MRR-O) and the respective combustion educts (R; R-F, R-O) and/or process medium-educt mixtures (MR; MRR-F; MRR-O) converging first in a flame foot (F1) of the flame (F) in the combustion chamber (40).

8. The method according to Claim 7, **characterized in that** at least one of the combustion educts (R; R-F; R-O) and the inerting process medium (M)
are pre-mixed prior to being supplied into the at least one inlet device (20-1, 20-2, 20-3) of the burner (100, 100') via the educt injection openings (31a, 31i) to form a process medium-educt mixture (MR; MRR-F; MRR-O), or
are mixed while still in the inlet device (20-1, 20-2, 20-3) after being supplied into the inlet device (20-1, 20-2, 20-3) of the burner (100, 100') via the educt injection openings (31a, 31i) and before they converge to form a process medium-educt mixture (MR; MRR-F; MRR-O).

9. The method according to Claim 7, **characterized in that** if exclusively one first passage (A1) is formed, an inertization front (IF) is formed having an inner inertization zone (IZ₁)
between the most downstream opening (31) of one of the combustion educts (R; R-F or R-O) and/or one of the process medium-educt mixtures (MR; MRR-F; MRR-O), or
between the most downstream educt injection openings (31a, 31i) of the combustion educts (R; R-F, R-O) and/or the process medium-educt mixtures (MR; MRR-F; MRR-O),
and the respective combustion educts (R; R-F, R-O) and/or process medium-educt mixtures (MR; MRR-F; MRR-O) converging in a flame foot (F1) of the flame (F).

10. The method according to Claim 7, **characterized in that** if one first passage (A1) and at least one further passage (A2, A3) are formed, an inertization front (IF) is formed having an inner inertization zone (IZ₁) and an outer inertization zone (IZ₂)
between the most downstream opening (31) of one of the combustion educts (R; R-F, R-O) and/or one of the process medium-educt mixtures (MR; MRR-F; MRR-O), or
between the most downstream educt injection openings (31a, 31i) of the combustion educts (R; R-F and R-O) and/or of the process medium-educt mixtures (MR; MRR-F, MRR-O),
and the respective combustion educts (R; R-F, R-O) and/or process medium-educt mixtures (MR; MRR-F; MRR-O) converging in a flame foot (F1) of the flame (F).

11. The method according to Claim 7, **characterized in that** one swirl generator (10-1, 10-2, 10-3) is associated with the at least one passage (A1, A2, A3), or joint swirl generators or, in each case, a separate swirl generator (10-1, 10-2, 10-3) is/are assigned to a plurality of passages (A1, A2, A3), as a result of which the respective swirl direction and the respective swirl number of the partial mass flows in the at least one passage (A1) or in the plurality of passages (A1, A2, A3) can be predefined, wherein if a plurality of passages (A1, A2, A3) are formed, swirl directions in the same or opposite direction of the partial mass flows having the same or different swirl numbers can be predefined.

12. The method according to Claim 7, **characterized in that** a partial mass flow of the combustion product (P) is branched off like a bypass from the combustion chamber (40) or behind the combustion chamber (40) and is cooled down by adding a cooling medium via a bypass supply line (62) of a bypass return line (60) and is subsequently fed back into the burner (100, 100').

13. The method according to Claim 7, **characterized in that** the total mass flow of the combustion end product (P) is already thermally influenced, in particular cooled, in the combustion chamber (40) by adding a medium, in particular the respective inerting process medium (M) via a supply line (44), as a result of which the total mass flow is increased by the partial mass flow of the supplied medium.

## Revendications

1. Brûleur (100, 100') de fabrication d'un produit de combustion (P) ajusté pour alimenter une chambre de combustion (40) en aval du brûleur (100, 100') dans le sens du flux sous l'effet d'une rotation d'ensemble en au moins deux éduits de combustion (R ; R-F ; R-O), en au moins un éduit de combustion (R) servant d'agent combustible (R-F), en au moins un éduit de combustion (R) servant d'agent oxydant (R-O) et en au moins un agent de procédé (M) présentant des propriétés inertisantes,
de façon à ce qu'une flamme (F) stabilisée par rotation se forme dans la chambre de combustion (40), dans lequel le brûleur (100, 100') présente au moins un dispositif de mise en rotation (10) pour stabiliser la flamme (F), dans lequel le brûleur (100, 100') dispose d'orifices (11, 31) dans au moins un dispositif d'amenée (20-1 ; 20-2 ; 20-3), par lesquels les flux massiques partiels peuvent alimenter la chambre de combustion en étant respectivement séparés les uns des autres de la manière suivante,
• amenée séparée des éduits de combustion (R-F ; R-O) par les orifices d'injection d'éduit (31a, 31i) et amenée séparée de l'agent de procédé (M) inertisant par au moins un orifice (11) ou
• amenée séparée des éduits de combustion (R-F ; R-O) par les orifices d'injection d'éduit (31a, 31i) moyennant le brassage préalable de l'un au moins des éduits de combustion (R-F, R-O) avec l'agent de procédé (M) inertisant pour former un mélange d'éduit-agent de procédé (MR ; MRR-F ; MRR-O) et amenée séparée de l'agent de procédé (M) inertisant par ledit orifice (11) au moins,
dans lequel ledit dispositif d'amenée (20-1 ; 20-2 ; 20-3) au moins présente au moins un passage (AI, A2, A3), à l'intérieur duquel les orifices d'injection d'éduit (31a ; 31i) disposés séparément les uns des autres sont aménagés afin d'amener séparément les éduits de combustion (R-F ; R-O) ou les mélanges d'éduit-agent de procédé (MR ; MRR-F ; MRR-O),
dans lequel ledit dispositif d'amenée (20-1 ; 20-2 ; 20-3) au moins dispose dudit orifice d'alimentation en agent de procédé (11) au moins afin d'amener séparément l'agent de procédé (M) inertisant, dans lequel au moins l'un des orifices d'injection d'éduit (31a, 31i) d'au moins un éduit de combustion (R-F; R-O) est disposé en aval du brûleur (100, 100') vu à la sortie dudit dispositif d'amenée (20-1; 20-2; 20-3) au moins de la chambre de combustion (40), dans lequel l'agent de procédé (M) inertisant se répand à l'intérieur dudit passage (A1, A2, A3) au moins et parvient jusqu'aux orifices d'injection d'éduit (31a ; 31i), de façon à ce que les flux massiques partiels des éduits de combustion (R; R-F, R-O) et/ou des mélanges d'éduit-agent de procédé (MR ; MRR-F ; MRR-O) soient refoulés des orifices d'injection (31a ; 31i) moyennant la formation de la flamme (F) stabilisée par rotation et ne se rejoignent qu'une fois derrière une partie avant d'inertisation (IF), qui est formée au niveau des orifices d'injection (31a ; 31i) par la présence simultanée de l'agent de procédé (M) inertisant, dans lequel la partie avant d'inertisation (IF) est constituée entre l'orifice d'injection situé le plus en aval (31a ; 31i) de l'un des éduits de combustion (R ; R-F, R-O) ou de l'un des mélanges d'éduit-agent de procédé (MR ; MRR-F ; MRR-O) et respectivement celui d'éduits de combustion (R ; R-F, R-O) et/ou de mélanges d'éduit-agent de procédé (MR ; MRR-F ; MRR-O) se rejoignant seulement à une base (F1) de la flamme (F) dans la chambre de de combustion (40).

2. Brûleur (100, 100') selon la revendication 1, **caractérisé en ce que** ledit dispositif d'amenée (20-1, 20-2, 20-3) i) est disposé en étant intégré devant le dispositif de mise rotation (10) ou ii) dans le dispositif de mise en rotation (10) ou iii) derrière le dispositif de mise en rotation (10).

3. Brûleur (100, 100') selon la revendication 1, **caractérisé en ce que** les orifices d'injection d'éduit (31a, 31i) des éduits de combustion (R ; R-F et R-O) ou des mélanges d'éduit-agent de procédé (MR ; MRR-F ; MRR-O) sont disposés radialement par rapport à l'axe médian longitudinal (X) du brûleur (100, 100') vu dans un plan (E) ou dans différents plans (E-X1, E-X2).

4. Brûleur (100, 100') selon la revendication 1, **caractérisé en ce que** ledit dispositif d'amenée (20-1, 20-2, 20-3) présente un premier passage (A1) ou un premier passage (A1) et au moins un autre passage (A2, A3).

5. Brûleur (100, 100') selon la revendication 4, **caractérisé en ce qu'**un dispositif de mise en rotation (10-1, 10-2, 10-3) est associé audit passage (A1, A2, A3) au moins ou qu'un dispositif commun de mise en rotation ou bien respectivement un dispositif séparé de mise en rotation (10-1, 10-2, 10-3) est/sont associé/s à plusieurs passages (A1, A2, A3).

6. Brûleur (100, 100') selon la revendication 5, **caractérisé en ce que** le sens de rotation respectif et/ou le nombre de rotations dudit flux massique partiel au moins dans ledit passage (A1) au moins ou des flux massiques partiels dans les plusieurs passages (Al, A2, A3) peuvent être prédéfinis par au moins un dispositif de mise en rotation (10-1) ou plusieurs dispositifs de mise en rotation (10-1, 10-2, 10-3), dans lequel les sens de rotation identiques ou opposés des flux massiques partiels peuvent être prédéfinis avec des nombres de rotations pareils ou différents dans le cas d'un arrangement de plusieurs passages (Al, A2, A3).

7. Procédé de fabrication d'un produit de combustion (P), lors duquel un brûleur (100, 100') selon l'une au moins des revendications 1 à 6 d'une chambre de combustion (40) montée en aval dans le sens du flux est alimenté sous l'effet d'une rotation d'ensemble en au moins deux éduits de combustion (R ; R-F ; R-O), en au moins un éduit de combustion (R) servant d'agent combustible (R-F), en au moins un éduit de combustion (R) servant d'agent oxydant (R-O) et en au moins un agent de procédé (M) présentant des propriétés inertisantes, de façon à ce qu'une flamme (F) stabilisée par rotation se forme dans la chambre de combustion (40), dans lequel le brûleur (100, 100') présente au moins un dispositif de mise en rotation (10) pour stabiliser la flamme (F), dans lequel le brûleur (100, 100') est alimenté en flux massiques partiels respectivement séparés les uns des autres par des orifices (11, 31) dans au moins un dispositif d'amenée (20-1 ; 20-2 ; 20-3) de la manière suivante,
• amenée séparée des éduits de combustion (R-F; R-O) par les orifices d'injection d'éduit (31a, 31i) et amenée séparée de l'agent de procédé (M) inertisant par au moins un orifice (11) ou
• amenée séparée des éduits de combustion (R-F ; R-O) par les orifices d'injection d'éduit (31a, 31i) moyennant le brassage préalable de l'un au moins des éduits de combustion (R-F, R-O) avec l'agent de procédé (M) inertisant pour former un mélange d'éduit-agent de procédé (MR ; MRR-F ; MRR-O) et amenée séparée de l'agent de procédé (M) inertisant par ledit orifice (11) au moins,
dans lequel ledit dispositif d'amenée (20-1 ; 20-2 ; 20-3) au moins présente au moins un passage (Al, A2, A3), à l'intérieur duquel les orifices d'injection d'éduit (31a ; 31i) disposés séparément les uns des autres sont aménagés afin d'amener séparément les éduits de combustion (R-F ; R-O) ou les mélanges d'éduit-agent de procédé (MR ; MRR-F ; MRR-O),
dans lequel ledit dispositif d'amenée (20-1 ; 20-2 ; 20-3) au moins dispose dudit orifice d'alimentation en agent de procédé (11) au moins afin d'amener séparément l'agent de procédé (M) inertisant, dans lequel au moins l'un des orifices d'injection d'éduit (31a, 31i) d'au moins un éduit de combustion (R-F; R-O) est disposé en aval du brûleur (100, 100') vu à la sortie dudit dispositif d'amenée (20-1; 20-2; 20-3) au moins de la chambre de combustion (40), dans lequel l'agent de procédé (M) inertisant se répand à l'intérieur dudit passage (A1, A2, A3) au moins et parvient jusqu'aux orifices d'injection d'éduit (31a ; 31i),
de façon à ce que les flux massiques partiels des éduits de combustion (R; R-F, R-O) et/ou des mélanges d'éduit-agent de procédé (MR ; MRR-F ; MRR-O) soient refoulés des orifices d'injection (31a ; 31i) moyennant la formation de la flamme (F) stabilisée par rotation et ne se rejoignent qu'une fois derrière une partie avant d'inertisation (IF), qui est formée au niveau des orifices d'injection (31a ; 31i) par la présence simultanée de l'agent de procédé (M) inertisant, dans lequel la partie avant d'inertisation (IF) est constituée entre l'orifice d'injection situé le plus en aval (31a ; 31i) de l'un des éduits de combustion (R ; R-F, R-O) ou de l'un des mélanges d'éduit-agent de procédé (MR ; MRR-F ; MRR-O) et respectivement celui d'éduits de combustion (R ; R-F, R-O) et/ou de mélanges d'éduit-agent de procédé (MR ; MRR-F ; MRR-O) se rejoignant seulement à une base (F1) de la flamme (F) dans la chambre de de combustion (40).

8. Procédé selon la revendication 7, **caractérisé en ce que** l'un des éduits de combustion (R ; R-F ; R-O) au moins et l'agent de procédé (M) inertisant
• sont brassés préalablement avant une amenée par les orifices d'injection d'éduit (31a, 31i) dans ledit dispositif d'amenée (20-1, 20-2, 20-3) au moins du brûleur (100, 100') pour former un mélange d'éduit-agent de procédé (MR ; MRR-F ; MRR-O) ou
• brassés après une amenée par les orifices d'injection d'éduit (31a, 31i) dans ledit dispositif d'amenée (20-1, 20-2, 20-3) du brûleur (100, 100') encore à l'intérieur du dispositif d'amenée (20-1, 20-2, 20-3) et avant qu'ils se rejoignent pour former un mélange d'éduit-agent de procédé (MR ; MRR-F ; MRR-O).

9. Procédé selon la revendication 7, **caractérisé en ce qu'**en cas de formation exclusive d'un premier passage (A1), une partie avant d'inertisation (IF) est constituée avec une zone d'inertisation intérieure (IZ1)
• entre l'orifice situé le plus en aval (31) de l'un des éduits de combustion (R ; R-F ou R-O) et/ou de l'un des mélanges d'éduit-agent de procédé (MR ; MRR-F ; MRR-O) ou
• entre les orifices d'injection d'éduit situés le plus en aval (31a ; 31i) des éduits de combustion (R ; R-F, R-O) et/ou des mélanges d'éduit-agent de procédé (MR ; MRR-F ; MRR-O)
et respectivement celui d'éduits de combustion (R ; R-F, R-O) et/ou de mélanges d'éduit-agent de procédé (MR ; MRR-F ; MRR-O) se rejoignant à une base (F1) de la flamme (F).

10. Procédé selon la revendication 7, **caractérisé en ce qu'**en cas de formation d'un premier passage (A1) et d'au moins un autre passage (A2, A3), une partie avant d'inertisation (IF) est constituée avec une zone d'inertisation intérieure (IZ₁) et une zone d'inertisation extérieure (IZ₂)
• entre l'orifice situé le plus en aval (31) de l'un des éduits de combustion (R ; R-F, R-O) et/ou de l'un des mélanges d'éduit-agent de procédé (MR ; MRR-F ; MRR-O) ou
• entre les orifices d'injection d'éduit situés le plus en aval (31a ; 31i) des éduits de combustion (R ; R-F et R-O) et/ou des mélanges d'éduit-agent de procédé (MR) ;MRR-F, MRR-O)
et respectivement celui d'éduits de combustion (R ; R-F, R-O) et/ou de mélanges d'éduit-agent de procédé (MR ; MRR-F ; MRR-O) se rejoignant à une base (F1) de la flamme (F).

11. Procédé selon la revendication 7, **caractérisé en ce qu'**un dispositif de mise en rotation (10-1, 10-2, 10-3) est associé audit passage (A1, A2, A3) au moins ou que respectivement un dispositif séparé de mise en rotation (10-1, 10-2, 10-3) ou des dispositifs communs de mise en rotation est/sont associé/s à plusieurs passages (A1, A2, A3), ce qui permet de prédéfinir le sens de rotation respectif et le nombre de rotations respectif des flux massiques partiels dans ledit passage (A1) au moins ou dans les plusieurs passages (Al, A2, A3), sachant que les sens de rotation identiques ou opposés des flux massiques partiels peuvent être prédéfinis avec des nombres de rotations pareils ou différents dans le cas d'un arrangement de plusieurs passages (Al, A2, A3).

12. Procédé selon la revendication 7, **caractérisé en ce qu'**un flux massique partiel du produit de combustion (P) est acheminé hors de la chambre de combustion (40) ou derrière la chambre de combustion (40) de façon à bifurquer par dérivation et à être refroidi par l'apport d'un fluide de refroidissement via une conduite d'alimentation de dérivation (62) d'une conduite de retour de dérivation (60) pour retourner ensuite dans le brûleur (100, 100').

13. Procédé selon la revendication 7, **caractérisé en ce que** le flux massique total du produit de combustion (P) subit déjà une influence thermique, en particulier se refroidit dans la chambre de combustion (40) par l'apport d'un fluide, notamment de l'agent de procédé (M) inertisant respectif via une conduite d'alimentation (44), moyennant quoi le flux massique total s'accroit du flux massique partiel du fluide alimenté.
